# EUROPÄISCHE PATENTSCHRIFT

(11) **EP 1 778 942 B1**
(45) Veröffentlichungstag und Bekanntmachung des Hinweises auf die Patenterteilung: **11.03.2009**
(21) Anmeldenummer: 05850203.0
(22) Anmeldetag: 29.12.2005
(51) Int. Cl.: E05F 11/48, E05B 65/12, B60J 1/17, B60J 5/04, E05F 15/16, E05F 11/42

(54) **VERSTELLSYSTEM FÜR EINE KRAFTFAHRZEUGTÜR**
ADJUSTING SYSTEM FOR A MOTOR VEHICLE DOOR
SYSTEME DE DEPLACEMENT POUR PORTE DE VEHICULE AUTOMOBILE

(30) Priorität: 14.01.2005 DE 202005000537 U; 14.01.2005 DE 102005001776; 26.05.2005 DE 102005025087
(43) Veröffentlichungstag der Anmeldung: 02.05.2007
(73) Patentinhaber: Brose Fahrzeugteile GmbH & Co. KG, Coburg, 96450 Coburg (DE)
(72) Erfinder: KRIESE, Olaf, 96450 Coburg (DE); CRUZ, Patricia, 96049 Bamberg (DE); DOHLES, Hilmar, 96274 Itzgrund (DE); BÜCKER, Rolf, 96047 Bamberg (DE); SCHREIBER, Ronny, 98593 Floh-Seligenthal (DE); STENZEL, Manfred, 96047 Bamberg (DE); KRÜGER, Harald, 91056 Erlangen (DE)
(74) Vertreter: Baumgärtel, Gunnar
(86) Internationale Anmeldenummer: PCT/DE2005/002338
(87) Internationale Veröffentlichungsnummer: WO 2006/074632

(56) Entgegenhaltungen:
- WO-A-01/07277
- DE-A1- 10 057 352
- DE-A1- 19 701 378
- DE-C1- 19 526 451
- DE-U1- 20 218 679

## Beschreibung

Die Erfindung betrifft ein Verstellsystem für eine Kraftfahrzeugtür nach dem Oberbegriff des Patentanspruchs 1.

Ein derartiges Verstellsystem umfasst einen (einsträngigen oder mehrsträngigen) Fensterheber zum Verstellen einer Fensterscheibe der Kraftfahrzeugtür, der mindestens ein in Verstellrichtung der Fensterscheibe erstrecktes (flexibles oder starres) Kraftübertragungselement aufweist, das sich entlang des oder jedes Stranges des Fensterhebers erstreckt und mit einem Verstellantrieb gekoppelt ist. Hierbei kann es sich beispielsweise um ein flexibles Kraftübertragungselement in Form eines Seiles oder eines schraubenförmig ausgebildeten biegeelastischen Elementes handeln oder um ein starres Kraftübertragungselement in Form einer Zahnstange oder einer Spindel. Ferner weist der Fensterheber mindestens einen Führungsbereich zur Führung der zu verstellenden Fensterscheibe in Verstellrichtung auf, der beispielsweise als Führungsschiene ausgebildet sein kann und entlang dem sich ein Kraftübertragungselement der beschrieben Art erstrecken kann. Darüber hinaus weist das Verstellsystem ein Türschloss sowie einen Schlossträger zur Aufnahme und Vormontage des Türschlosses - bereits außerhalb der Kraftfahrzeugtür - auf.

Ein Verstellsystem mit den Merkmalen des Oberbegriffs des Anspruchs 1 ist beispielsweise aus der WO 01/07277 A1 und der DE 100 57 352 A1 bekannt.

Aus DE 202 18 679 U1 ist eine kombinierte Antriebseinheit für ein Aggregat, z. B. einen Fensterheber, und für ein Türschloss bekannt, wobei eine Umschalteinheit zur wahlweisen Beaufschlagung des Fensterhebers oder des Türschlosses vorgesehen ist mit der Antriebskraft. Die Ansteuerung der Umschalteinheit erfolgt über den Türbetätigungshebel. Wenn der Türgriff betätigt wird, wird die Antriebskraft von der Umschalteinheit auf das Türschloss geleitet. Der Fensterheber kann nur betrieben werden, wenn der Türgriff unbetätigt bleibt. Gemäß eines Ausführungsbeispiels dieser technischen Lehre ist ein einsträngiger Seilfensterheber vorgesehen, dessen Seilschlaufe mit einem Antrieb in Verbindung steht, der wiederum am Gehäuse des Türschlosses lagert. Die separate Führungsschiene des Seilfensterhebers trägt an den Enden Seilumlenkelemente (z. B. Seilrollen) und ist - vor dem Einbau des kombinierten Antriebssystems - über die Seilschlaufe mit dem Türschloss flexibel verbunden.

Der Erfindung liegt das Problem zugrunde, ein Verstellsystem der eingangs genannten Art zu verbessern, insbesondere dessen Integrationsgrad zu erhöhen.

Erfindungsgemäß wird dieses Problem durch die Merkmalskombination des Patentanspruchs 1 gelöst. Die abhängigen Patentansprüche geben Vorzugsvarianten der Erfindung an.

Gemäß Patentanspruch 1 ist das einen Fensterheber aufweisende Verstellsystem derart - aufgebaut, dass der Schlossträger mit dem schlossseitigen Führungsbereich unmittelbar zu einer baulichen und funktionellen Einheit fest verbunden ist. Somit wird es möglich, einen unbewegten Bereich des an sich zum Schliesssystem gehörenden Schlossträgers zum funktionellen Bestandteil des Fensterhebers zu manchen. Oder anders ausgedrückt: Der Schlossträger und der schlossseitige Führungsbereich des Fensterhebers bilden eine bauliche Einheit und sind hierzu bevorzugt unmittelbar miteinander verbunden.

Mit Vorteil wird die bauliche Einheit aus Schlossträger und schlossseitigem Führungsbereich in Form eines Kunststoff-Spritzteits oder eines Leichtmetalt-Gussteils einstückig ausgebildet, um Montagekosten zu reduzieren. Weiterhin ist von Vorteil, in die bauliche Einheit aus Schlossträger und schlossseitigem Führungsbereich ein Teil des Schlossgehäuses, des Antriebsgehäuses für den Fensterheberantrieb und/oder des Gehäuses für eine elektronische Steuereinheit zu integrieren.

Darüber hinaus können zusätzlich weitere Funktionselemente oder Systeme an dem schlossseitigen Führungsbereich angebracht oder integriert werden. Beispielhaft seinen folgende Teile genannt: Türaussengriffhalter, eine Abdeckung oder dergleichen für das Schlosses zum Schutz gegen die Manipulation des Schlosses, Mittel zur Führung der angrenzenden seitlichen Scheibenkante der zu verstellenden Fensterscheibe, elektrische Leiterbahnen für die Stromversorgung und/oder zur Signalübertragung, und Elemente für das Watermanagement, d.h. für die Behandlung in eine Kraftfahrzeugtür eindringender Feuchtigkeit und Nässe.

Insbesondere im Fall eines doppelsträngigen Fensterhebers in Form eines Seilfensterhebers kann es zur Reduzierung des Transportvolumens und zur Vereinfachung der Handhabung von Vorteil sein, wenn die aus Schlossträger und schlossseitigem Führungsbereich bestehende bauliche Einheit zusätzlich Fixierungselemente trägt oder integriert aufweist, die zur Befestigung des zweiten Führungsbereichs an der besagten baulichen Feinheit geeignet sind. Ein solches "Zusammenklappen" des doppelsträngigen Seilfensterhebers für den Transport wird in einfacher Weise durch flexible Bowdenzüge zwischen den beiden Führungsbereichen ermöglicht.

Zusätzlich bietet es sich an, auch den Innenöffner und die Antriebseinheit des Fensterhebers über geeignete Fixierungsmittel temporär am ersten oder zweiten Führungsbereich zu befestigen, um eine definierte Positionierung der entsprechenden Teile zu erreichen und somit die Endmontage zu erleichtern. Weitere Fixierungsmittel können zur Befestigung von Bowdenzügen und elektrischen Kabeln vorgesehen sein.

Bei einem Seilfensterheber sollte der schlossseitige Führungsbereich, also die Baueinheit, die auch den Schlossträger aufweist, Mittel zur Seilumlenkung tragen. Dies können Seilrollen oder Gleiterelemente sein. In Falle von Gleiterelementen können diese einteilig in die Baueinheit integriert werden, wenn man die Baueinheit als Kunststoff-Spritzgussteil oder als Leichtmetallgussteil ausbildet.

Insbesondere bei der Ausbildung der Baueinheit als Kunststoff-Spritzgussteil ist es von Vorteil, die Mittel zur Seilumlenkung bei der Befestigung des Verstellsystems direkt mit der Türkarosserie oder einem an der Türkarosserie vorgesehenen Teil zu verbinden. Dadurch wird erreicht, dass die Seilumlenkkräfte direkt in die Türkarosserie eingeleitet werden, ohne den Umweg über den betreffenden Führungsbereich zu nehmen.

Vorteilhaft kann der schlossseitige Führungsbereich als U-förmiger Umgriff der seitlichen Kante der Fensterscheibe ausgebildet werden. Nach einer Vorzugsvariante der Erfindung ist vorgesehen, dass der zugeordnete Mitnehmer mit dem diesem Führungsbereich nicht in einem direkten zwangsgeführten Eingriff steht, sondern vielmehr ausschließlich die Verstellkräfte im Bereich der Scheibenunterkante einleitet. Der Mitnehmer des zweiten Führungsbereichs steht hingegen bevorzugt formschlüssig mit dem sich in Verschieberichtung der Fensterscheibe erstreckenden schienenartigen Abschnitt des zweiten Führungsbereichs verschieblich und zwangsgeführt in Verbindung. Somit wird nur hier eine Zwangsführung in Fahrzeuglängsrichtung vorgenommen, so dass Fluchtungsfehler in der Parallelität der beiden Führungsbereiche in dem U-förmigen Umgriff der seitlichen Scheibenkante im Bereich des ersten Führungsbereichs der bezeichneten Baueinheit ausgeglichen werden können.

Gemäß einer weiteren bevorzugten Ausführungsform der Erfindung auf der Basis eines aus Kunststoff gefertigten schlossseitigen Führungsbereichs soll der andere zweite, Führungsbereich im Bereich des Massenschwerpunktes der Fensterscheibe angeordnet sein, und zwar insbesondere dann, wenn die Befestigung der schlossseitigen Mittel zur Seilumlenkung nicht an der Türkarosserie erfolgen kann. So soll eine Überlastung des schlossseitigen Kunststoff-Führungsbereichs verhindert werden.

Um eine instabile, zum Verkippen der Fensterscheibe um die Fahrzeugquerachse neigende Scheibenanbindung zu vermeiden, sollte der zweite, vorzugsweise aus einem festen, metallischen Werkstoff gefertigte Führungsbereich derart angeordnet sein, dass dieser 60 % - 80 % des Scheibengewichts und der z.B. aus Kunststoff bestehende erste (schlossseitige) Führungsbereich 20 % - 40 % des Scheibengewichts trägt.

Das Erfindungsprinzip lässt sich auch auf andere doppelsträngige Fensterheberprinzipien anwenden, insbesondere auf solche, bei denen die Antriebskraft über Zahnstangen, Spindeln, flexible Verzahnungsbänder oder dergleichen übertragen wird.

Nachfolgen wird die Erfindung anhand einiger Ausführungsbeispiele und der dargestellten Figuren näher erläutert werden.

Es zeigen:
- Figur 1: ein Verstellsystem mit einem doppelsträngigen Seilfensterheber mit einem schlossseitigen Führungsbereich, der einteilig einen hochintegrierten Schlossträger aufweist, und mit einem weiteren Führungsbereich, an dem ein Mitnehmer zwangsgeführt ist;
- Figur 1a: eine schematische Darstellung eines Schnittes durch den schlossseitigen Führungsbereich im Bereich der seitlichen Scheibenkante;
- Figur 2: ein Verstellsystem wie Figur 1, jedoch mit einer Anordnung des zweiten Führungsbereichs bei etwa zwei Drittel der Gewichtskraft der Fensterscheibe;
- Figur 3: ein Verstellsystem wie Figur 2, jedoch mit einer Montageplatte zur Abdichtung einer Montageöffnung in einer Nass-/Trockenraumtrennung einer Kraftfahrzeugtür, auf der trockenraumseitig der Motor und ein elektronische Steuereinheit angeordnet sind;
- Figur 4: ein Verstellsystem wie Figur 2, jedoch mit einer Integration der die Antriebseinheit tragenden Montageplatte in die bauliche Einheit aus schlossseitigem Führungsbereich und Schlossträger,
- Figur 4a: eine schematische Darstellung einer Kraftfahrzeugtür mit zwei Montageöffnungen mit Blick auf die Nassraumseite des Türinnenbleches;
- Figur 5: ein Verstellsystem ähnlich Figur 1, jedoch mit zwei Führungsbereichen jeweils in Form von U-förmigen Umgriffen der seitlichen Scheibenkanten;
- Figur 6: eine schematische Darstellung eines doppelsträngigen Zahnstangen-Fensterhebers mit integriertem Schlossträger;
- Figur 7: eine schematische Darstellung eines doppelsträngigen Spindel-Fensterhebers mit einem in den schlossseitigen Führungsbereich integrierten Schlossträger;
- Figur 8: einsträngiges Verstellsystem mit einer Integration der die Antriebseinheit tragenden Montageplatte in die bauliche Einheit aus Führungsbereich und Schlossträger;
- Figur 9: eine schematische Darstellung eines Verstellsystems mit einem doppelsträngigen Fensterheber und einem Aggregateträger zur Aufnahme des Verstellsystems im vormontierten Zustand;
- Figur 10: ein Verstellsystem mit einem doppelsträngigen Fensterheber nach Einbau in eine Kraftfahrzeugtür;
- Figur 11: ein Verstellsystem mit einem doppelsträngigen Fensterheber, vormontiert auf einem aus Metall bestehenden Aggregateträger,
- Figuren 12 bis 12b: ein Verstellsystem mit einem doppelsträngigen Fensterheber, vormontiert auf einem aus Kunststoff bestehenden Aggregateträger;
- Figuren 13 und 13a: ein aus zwei Modulen zusammensetzbares Verstellsystem mit einem doppelsträngigen Fensterheber;
- Figur 14: ein aus drei Modulen zusammensetzbares Verstellsystem mit doppelsträngigem Fensterheber;
- Figuren 15 und 15a: ein zu einem Modul zusarnmengefasstes Verstellsystem mit einem einsträngigen Fensterheber;
- Figur 16: eine Abwandlung des Verstellsystems aus Figur 15;
- Figur 17: ein Verstellsystem mit einem Fensterheber, der einen mit der zu verstellenden Fensterscheibe mitfahrenden Antrieb aufweist;
- Figur 18: ein Verstellsystem mit einem einsträngigen Fensterheber;
- Figuren 19 und 19a: das Verstellsystem aus Figur 18 vormontiert auf einem Aggregateträger.

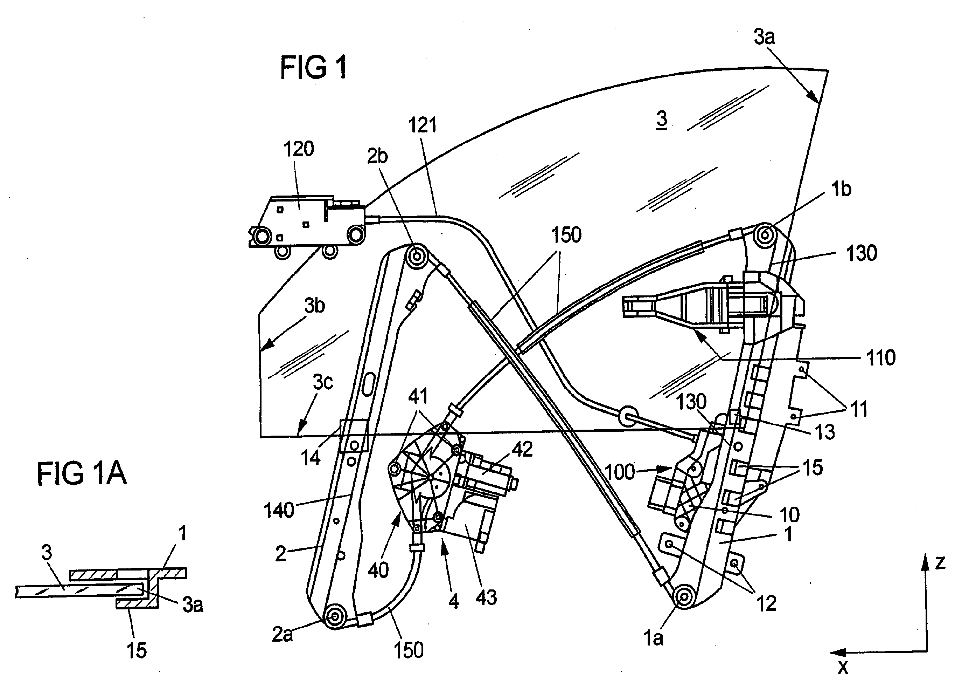

In den Figuren 1 und 1a ist ein Verstellsystem für ein Kraftfahrzeug, insbesondere eine Kraftfahrzeugtür, dargestellt, welches als wesentliche Systemkomponenten einen Fensterheber in Form eines doppelsträngigen Seilfensterhebers und ein Schließsystem umfasst.

Das Schließsystem wird gebildet durch ein Türschloss 100, das auf einem vorzugsweise aus Kunststoff oder Leichtmetall bestehenden Schlossträger 10 montiert ist, und aus einem Türinnenöffner 120, der über einen Koppelmechanismus bzw. Kraftübertragungsmechanismus in Form eines Bowdenzugs 121 mit dem Türschloss 100 gekoppelt ist, sowie aus einem Außengriffhalter 110 für einen Türaußengriff, der in entsprechender Weise wie der Türinnenöffner 120 mit dem Türschloss 100 zu koppeln ist.

Der Fensterheber ist ausgebildet als ein doppelsträngiger Seilfensterheber mit zwei quer zur Verstellrichtung z der zu verstellenden Fensterscheibe 3 (also entlang der Fahrzeuglängsrichtung x) voneinander beabstandeten Führungsbereichen in Form von Führungsschienen 1, 2, die sich jeweils in Verstellrichtung z der Fensterscheibe 3 erstrecken. Zur Führung der Fensterscheibe 3 an diesen beiden Führungsschienen 1, 2 weist die eine Führungsschiene 1 eine Mehrzahl in Erstreckungsrichtung z der Führungsschiene 1 hintereinander angeordneter Umgriffsbereiche 15 auf, die eine hintere seitliche Scheibenkante 3a der Fensterscheibe 3 umgreifen und somit einen Führungskanal für jene seitliche Scheibenkante 3a bilden, in dem die Fensterscheibe 3 mit der besagten seitlichen Scheibenkante 3a in Verstellrichtung z geführt ist und gegen Verschiebebewegungen senkrecht zur Verstellrichtung z gesichert ist.

Die zweite Führungsschiene 2 dient zur Führung eines Mitnehmers 14 in Verstellrichtung z der Fensterscheibe 3, welcher formschlüssig mit der zweiten Führungsschiene 2. in Eingriff steht, so dass er sich in Verstellrichtung z der Fensterscheibe 3 auf der zweiten Führungsschiene 2 verschieben lässt und gleichzeitig gegen Bewegungen senkrecht zur Verstellrichtung z gesichert ist. Dieser Mitnehmer 14 ist im Bereich der unteren Scheibenkante 3c der Fensterscheibe 3 mit dieser verbunden und liegt benachbart zu einer seitlichen Scheibenkante 3b der Fensterscheibe 3, die als vordere Scheibenkante der der ersten Führungsschiene 1 zugeordneten hinteren Scheibenkante 3a gegenüberliegt.

Entlang der beiden Führungsschienen 1, 2 ist jeweils ein Abschnitt 130 bzw. 140 eines Zugmittels in Form eines Seiles geführt, das die von einem Verstellantrieb 4 erzeugte Verstellkraft zur Verschiebung der Fensterscheibe auf die zu verstellende Fensterscheibe überträgt. Hierzu ist an jedem der beiden entlang einer der beiden Führungsschienen 1, 2 geführten Seilabschnitte 130, 140 in bekannter Weise ein Mitnehmer 13 bzw. 14 befestigt, der wiederum im Bereich der unteren Scheibenkante 3c der zu verstellenden Fensterscheibe 3 mit dieser verbunden ist. Dabei steht der der ersten Führungsschiene 1 zugeordnete Mitnehmer 13 mit jener Führungsschiene 1 nicht in Eingriff, sondern wird lediglich durch den entlang jener ersten Führungsschiene 1 geführten Seilabschnitt 130 in Verstellrichtung z der zu verstellenden Fensterscheibe 3 beweglich geführt. Der der zweiten Führungsschiene 2 zugeordnete Mitnehmer 14 steht demgegenüber, wie beschrieben, formschlüssig in Eingriff mit der zweiten Führungsschiene 2, so dass diese dem zugeordneten Mitnehmer 14 eine definierte Bewegungsrichtung (in Verstellrichtung z der zu verstellenden Fensterscheibe 3) aufzwingt (Zwangsführung).

Zur Führung der beiden Seilabschnitte 130, 140 entlang jeweils einer der beiden Führungsschienen 1, 2 sind dabei an den Enden der Führungsschienen 1, 2 jeweils ein oberes und unteres Umlenkelement 1 a, 1 b bzw. 2a, 2b in Form einer Umlenkrolle vorgesehen.

Im Bereich zwischen den beiden Führungsschienen 1, 2 ist das Zugmittel in Bowdenhüllen 150 definiert geführt und steht dort außerdem mit einem Verstellantrieb 4 in Wirkverbindung.

Der Verstellantrieb 4 umfasst eine mit Befestigungsstellen 41 versehenen Montageträger 40 in Form einer Montageplatte, in die gleichzeitig ein Gehäusedeckel zur Aufnahme von Getriebeelementen des Verstellantriebs 4 integriert ist und die zudem einen Motor 42 sowie ein Steuergerät 43 in Form einer Steuerelektronik des Verstellantriebs 4 trägt. Über die an der Montageplatte 40 vorgesehenen Befestigungsstellen 41 ist der Verstellantrieb 4 an einer geeigneten Türkomponente, etwa einem Modulträger oder einem Türinnenblech befestigbar.

Zum Verstellen der Fensterscheibe 3 nach oben oder unten in Verstellrichtung z wird der Motor 42 des Verstellantriebs 4 in der einen oder anderen Drehrichtung betätigt, wobei das vom Motor 42 erzeugte Moment über die hierfür vorgesehenen Getriebeelemente des Verstellantriebs 4 auf das außerhalb der Führungsschienen 1, 2 in Bowdenhüllen 150 geführte, eine geschlossene Schlaufe bildende Zugmittel übertragen werden, das sich in Abhängigkeit von der Drehrichtung des Motors 42 in der einen oder anderen Richtung bewegt. Hierdurch werden die mit den an den Führungsschienen 1, 2 erstreckten Seilabschnitten 130, 140 des Zugmittels verbundenen Mitnehmer 13, 14 entlang der Verstellrichtung z angehoben oder abgesenkt, wobei sie die zu verstellende Fensterscheibe 3 mitnehmen. Dabei erfolgt an der einen, ersten Führungsschiene 1 eine Führung der Fensterscheibe 3 mit einer seitlichen Scheibenkante 3a in dem durch die Umgriffsbereiche 15 gebildeten Führungskanal der ersten Führungsschiene 1, während an der zweiten Führungsschiene 2 die Fensterscheibe 3 indirekt über den formschlüssig mit der zweiten Führungsschiene 2 in Eingriff stehenden Mitnehmer 14 geführt ist. Der der zweiten Führungsschiene 2 zugeordnete Mitnehmer 14 dient somit sowohl zur Tragung der Verstellkräfte vom Zugmittel auf die zu verstellende Fensterscheibe als auch zur definierten Führung der zu verstellenden Fensterscheibe 3 entlang der zugehörigen Führungsschiene 2. Der der ersten Führungsschiene 1 zugeordnete Mitnehmer 13 dient demgegenüber ausschließlich zur Übertragung der Verstellkräfte von dem Zugmittel auf die zu verstellende Fensterscheibe 3, nicht aber zur definierten Führung der Fensterscheibe 3 entlang der Führungsschiene 1. Diese Aufgabe wird vielmehr durch den Eingriff der seitlichen Scheibenkante 3a in den an der ersten Führungsschiene 1 gebildeten Führungskanal übernommen, vergleiche Figur 1 a.

Eine Besonderheit des in den Figuren 1 und 1 a dargestellten Verstellsystems liegt darin, dass der Schlossträger 10 und die einen Führungsbereich für die zu verstellende Fensterscheibe 3 bildende erste Führungsschiene 1 zu einer baulichen Einheit zusammengefasst, nämlich fest miteinander verbunden sind. Dies kann einerseits in der Weise erfolgen, dass der Schlossträger 10 und die erste Führungsschiene 1 als zwei separat gefertigte Komponenten durch geeignete Befestigungsmittel fest miteinander verbunden sind. Nach einer anderen Ausführungsform sind der Schlossträger 10 und die erste Führungsschiene 1 einstückig miteinander geformt, also gemeinsam als ein einheitliches Bauteil hergestellt. Als Materialien eignen sich dabei jeweils insbesondere Kunststoff oder Leichtmetall.

Zur Befestigung der durch die erste Führungsschiene 1 und den Schlossträger 10 gebildeten Baueinheit an einer Kraftfahrzeugtür dienen an dieser Baueinheit 1, 10 vorgesehene Befestigungsstellen 11, 12 in Form von Befestigungsöffnungen.

Diese hoch integrierte, durch die erste Führungsschiene 1 des Fensterhebers und den Schlossträger 10 des Schließsystems gebildete Baueinheit übernimmt eine Vielzahl Funktionen innerhalb des gesamten Verstellsystems. Hierzu gehören:
- die Bildung einer Schnittstelle für den Außengriffhalter 110,
- die Aufnahme von Schlossabdeckungen für den Diebstahlschutz sowie den Schutz vor Feuchtigkeit,
- die Bildung eines Führungskanales für die zu verstellende Fensterscheibe durch entsprechende an der Baueinheit 1, 10 angeformte Umgriffsbereiche 15 in Form von Stegen, die zudem eine seitliche Scheibendichtung aufnehmen können,
- eine Mehrzahl Befestigungsstellen 11, 12 zur Anbindung der Baueinheit an eine Türkarosserie, wozu auch in den Drehachsen der Umlenkrollen 1a, 1b vorgesehene Durchgangsöffnungen dienen können,
- Umlenkelemente 1a, 1b zur Umlenkung des Zugmittels zur Bildung eines entlang der Führungsschiene 1 der Baueinheit 1,10 erstreckten Seilabschnittes 130,

Durch die Schaffung eines einheitlichen Trägers 1, 10 für wesentliche Komponenten eines Schließsystems einerseits und eines Fensterhebers andererseits werden die beiden genannten Verstelleinrichtungen zu einem Verstellsystem zusammengefasst, dessen Komponenten kompakt und kostengünstig gemeinsam an der durch die Führungsschiene 1 und den Schlossträger 2 gebildeten Baueinheit vormontiert werden können.

Hinsichtlich der Möglichkeit einer Vormontage einer Vielzahl Komponenten des durch das Schließsystem und den Fensterheber gebildeten Verstellsystems ist insbesondere auch zu berücksichtigen, das beispielsweise der Türinnenöffner 120 über den zugeordneten Bowdenzug 121 bereits bei Vormontage des Verstellsystems mit dem Türschloss 100 verbunden und hierdurch in die vormontierte modulare Baugruppe integriert werden kann. Das Gleiche gilt für die zweite Führungsschiene 2 sowie den Verstellantrieb 4, die über das in den Bowdenhüllen 150 geführte Zugmittel bereits bei der Vormontage mit den an der ersten Führungsschiene 1 angeordneten Komponenten eines Fensterhebers verbunden und hierdurch zu einer modularen Einheit zusammengefasst werden können.

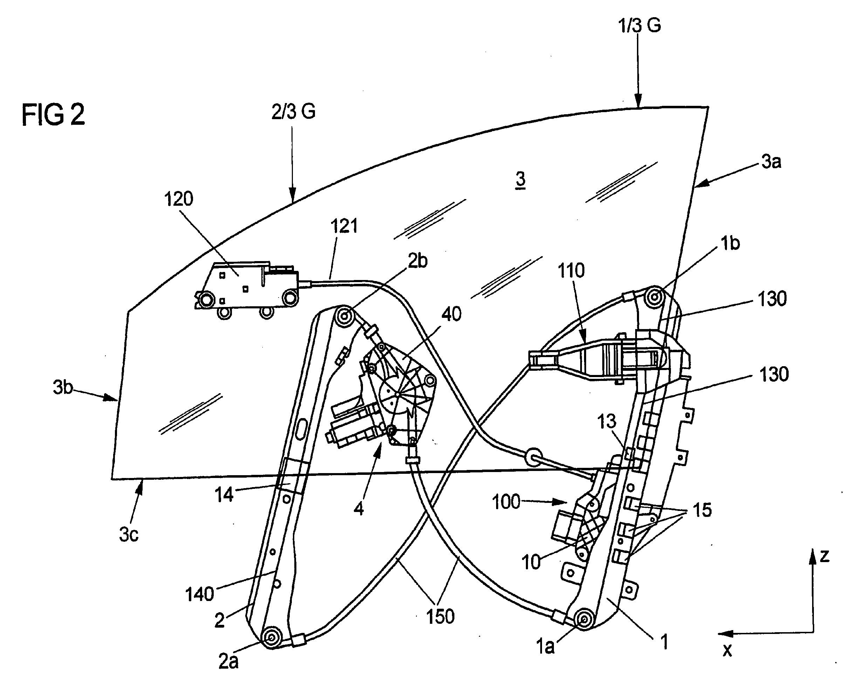

Nachfolgend werden anhand der Figuren 2 bis 8 mehrere Abwandlungen und Weiterbildungen des Verstellsystems aus den Figuren 1 und 1a beschrieben werden. Dabei wird zur besseren Erkennbarkeit der Zusammenhänge für übereinstimmende Komponenten, auch wenn diese im Einzelfall konstruktiv etwas unterschiedlich ausgelegt sind, jeweils dasselbe Bezugszeichen verwendet werden wie in den Figuren 1 und 1a. So wird also etwa die erste Führungsschiene des Fensterhebers nachfolgend stets mit dem Bezugszeichen 1 bezeichnet werden, unabhängig davon, dass die konstruktive Ausgestaltung der Führungsschiene variieren kann.

Die Beschreibung der Figuren 2 bis 8 beschränkt sich dabei im Wesentlichen auf die Beschreibung der Unterschiede zu dem in den Figuren 1 und 1a gezeigten Verstellsystem. Hinsichtlich solcher Komponenten, die in Aufbau und Funktion mit dem in den Figuren 1 und 1a gezeigten Verstellsystem übereinstimmen, wird daher auf die Beschreibung des in den Figuren 1 und 1a dargestellten Verstellsystems Bezug genommen.

Das in Figur 2 gezeigte Verstellsystem stimmt hinsichtlich seiner Funktion und hinsichtlich des konstruktiven Aufbaus der einzelnen Komponenten mit dem anhand der Figuren 1 und 1a beschriebenen nahezu vollständig überein. Eine Besonderheit des in Figur 2 gezeigten Verstellsystems liegt darin, dass die beiden Führungsschienen 1, 2 für die Fensterscheibe 3 senkrecht zu ihrer Verstellrichtung z, also in Fahrzeuglängsrichtung x, derart hintereinander angeordnet sind, dass der an der schlossseitigen, der hinteren Scheibenkante 3a zugeordneten Führungsschiene 1 geführte Mitnehmer 13 lediglich etwa 20 % bis 40 %, vorzugsweise etwa 1/3, des Gewichtes G der zu verstellenden Fensterscheibe 3 trägt, während der andere, an der zweiten Führungsschiene 2 geführte Mitnehmer 14 etwa 60 % bis 80 %, vorzugsweise ungefähr 2/3 der Gewichtskraft G der Fensterscheibe trägt. Hierzu ist die schlossabgewandte (vordere) zweite Führungsschiene 2 deutlich von der schlossabgewandten (vorderen) seitlichen Scheibenkante 3b beabstandet angeordnet, und liegt von der schlossseitigen, hinteren seitlichen Scheibenkante 3a her gesehen in Fahrzeuglängsrichtung x etwas hinter der Mitte der unteren Scheibenkante 3c.

Ein weiterer Unterschied zu der Anordnung aus den Figuren 1 und 1a liegt darin, dass der Verstellantrieb 4 unmittelbar vor dem oberen Umlenkelement 2b (Seilrolle) der schlossabgewandten zweiten Führungsschiene 2 angeordnet ist, also der Abstand zwischen dem Seilausgang des Verstellantriebs 4, über den das durch den Verstellantrieb 4 angetriebene Zugmittel in Form eines Seiles dem oberen Umlenkelement 2b der zweiten Führungsschiene 2 und damit auch der zweiten Führungsschiene 2 selbst zugeführt wird, und dem Verstellantrieb 4 selbst auf ein Minimum reduziert ist.

Durch die beschriebene Ausbildung des in Figur 2 gezeigten Verstellsystems einerseits hinsichtlich der Anordnung der beiden Führungsschienen 1, 2 - entlang der Scheibenunterkante 3c betrachtet - und andererseits hinsichtlich der Anordnung des Verstellantriebs 4 bezüglich der zweiten Führungsschiene 2, insbesondere deren oberem Seilumlenkelement 2b, werden die Reibungsverluste in den Bowdenhüllen 150 minimiert und der schlossseitige Führungsbereich (Führungsschiene 1) des Verstellsystems wird mit vergleichsweise geringen Gewichtskräften der Fensterscheibe 3 (verglichen mit der anderen, zweiten Führungsschiene 2) belastet. Hierdurch können zur Bildung des schlossseitigen Führungsbereiches, der mit dem Schlossträger 10 zu einer baulichen Einheit zusammengefasst ist, auch weniger belastbare Materialien verwendet werden; die Materialauswahl kann also auch andere Gesichtspunkte als die Belastbarkeit besonders berücksichtigen.

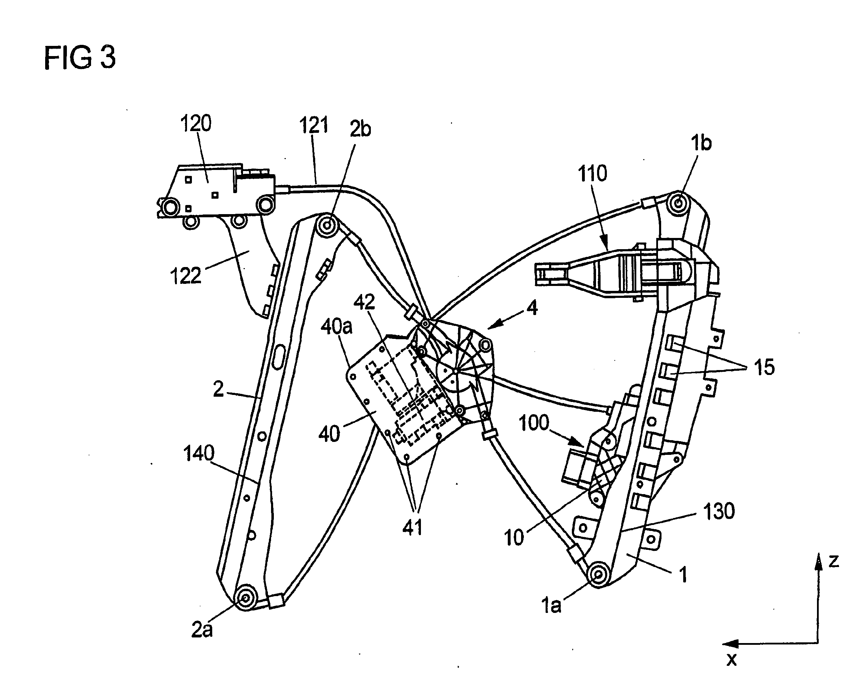

Figur 3 zeigt eine Weiterbildung des Verstellsystems aus Figur 2, bei der der durch eine Montageplatte gebildete Montageträger 40 des Verstellantriebs 4 am äußeren Rand eine umlaufende Dichtungskontur 40a aufweist, die zur Abdichtung einer Montageöffnung in der Türkarosserie eines Kraftfahrzeugs, z. B. in einem Aggregateträger oder einem Türinnenblech dienen kann, wobei durch die Dichtungskontur 40a eine hinreichende Abdichtung des Trockenraums gegenüber dem Nassraum der Fahrzeugtür gewährleistet werden soll. Die einzelnen Komponenten des Verstellantriebs 4 sind dabei derartig auf dem Montageträger 40 angeordnet, dass die elektrischen und elektronischen Komponenten, wie z. B. der Antriebsmotor 42 und eine zugeordnete Steuerelektronik, im Trockenraum liegen, während rein mechanische Komponenten, wie z. B. die durch den Motor 42 angetriebenen Getriebeelemente, im Nassraum angeordnet werden können. Hierdurch wird der im Trocken- und Nassraum der Fahrzeugtür zur Verfügung stehende Platz optimal genutzt. Zur Befestigung des Montageträgers 4 an einem Teil der Kraftfahrzeugkarosserie dienen dabei an dem Montageträger 40 vorgesehene Befestigungsstellen 41, z. B. in Form von Befestigungsöffnungen.

Ferner ist bei dem in Figur 3 dargestellten Ausführungsbeispiel dem Türinnenöffner 120 ein Haltewinkel 122 zugeordnet, mit dem der Türinnenöffner 120 während des Transports und vor dem Einbau des in Figur 3 gezeigten, vormontierbaren Verstellsystems provisorisch, insbesondere formschlüssig und lösbar nach dem Prinzip einer Clipsverbindung, an der zweiten Führungsschiene 2 angeordnet sein kann. Bei der Befestigung des in Figur 3 gezeigten Verstellsystems an der Türkarosserie eines Kraftfahrzeugs wird die provisorische Verbindung zwischen dem Türinnenöffner 120 und der zweiten Führungsschiene 2 über den Haltewinkel 122 wieder gelöst und der Türinnenöffner 120 wird in seiner Funktionsposition an der Türkarosserie festgelegt.

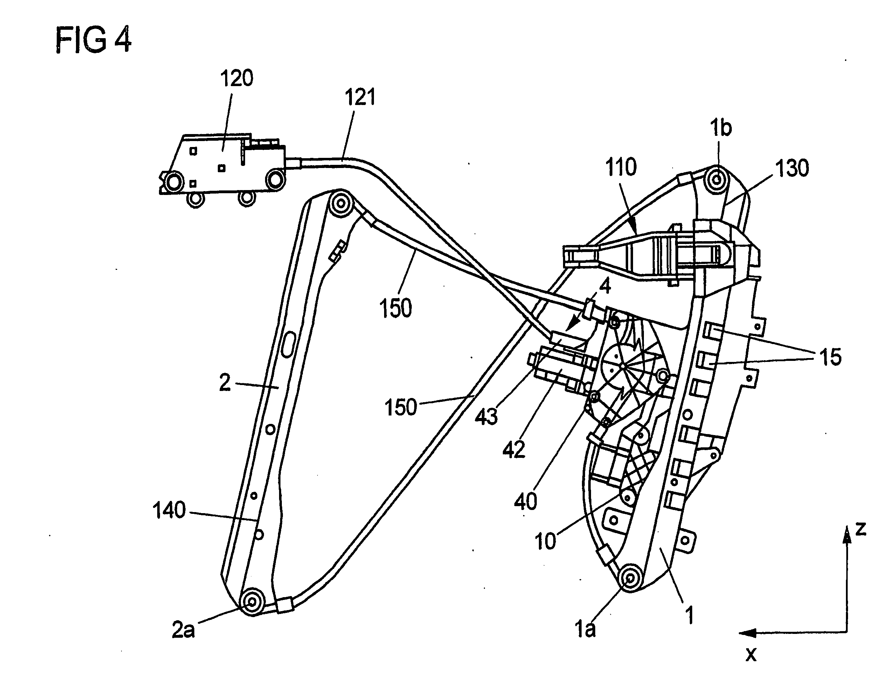

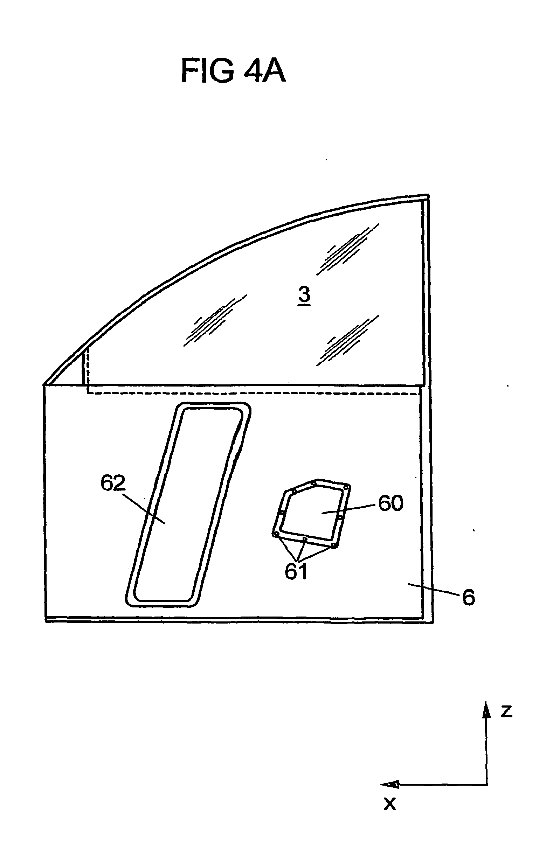

Bei dem in Figur 4 gezeigten Ausführungsbeispiel eines Verstellsystems ist der Montageträger 40 des Verstellantriebs 4 in die aus der ersten Führungsschiene 1 und dem Schlossträger 10 gebildete Baueinheit integriert, also einstückig an dieser Baueinheit angeformt oder als separate Komponente an dieser Baueinheit befestigt. Im Übrigen entspricht das in Figur 4 gezeigte Verstellsystem dem anhand Figur 2 beschriebenen.

Zur Montage des in Figur 4 gezeigten Verstellsystems an einer Kraftfahrzeugtür bieten sich zwei vorteilhafte Möglichkeiten an, die nachfolgend unter Bezugnahme auf die in Figur 4a schematisch dargestellte Kraftfahrzeugtür erläutert werden, die eine zwei Montageöffnungen 60, 62 aufweisende Türinnenhaut, z. B. in Form eines Türinnenblechs oder eines an der Kraftfahrzeugtür zu befestigenden, außerhalb der Kraftfahrzeugtür mit vormontierten Komponenten zu einem Türmodul zusammenfügbaren Aggregateträgers umfasst.

Wenn das Verstellsystem von der Trockenraumseite, also von der dem Fahrzeuginnenraum eines Kraftfahrzeugs zugewandten Seite der Türinnenhaut 6 her montiert werden soll, wird zunächst das Verstellsystem (mit Ausnahme des Türinnenöffners 120) wie in Figur 4 dargestellt, durch die größere Montageöffnung 62 der beiden Montageöffnungen 60, 62 hindurch auf die dem Fahrzeuginnenraum abgewandte Seite der Türinnenhaut 6, also in den zwischen der Türinnenhaut 6 und der in Figur 4a nicht erkennbaren Türaußenhaut gebildeten Türkasten bzw. Nassraum eingeführt. Anschließend werden die elektrischen und elektronischen Komponenten des Verstellantriebs 4, also insbesondere der Motor 42 und die Steuereinheit 43 durch die kleinere Montageöffnung 60 hindurch wieder in den Trockenraum gefädelt, der auf der dem Fahrzeuginnenraum zugewandten Seite der Türinnenhaut 6 liegt. Anschließend wird der Montageträger 40 mit seinen Befestigungsstellen 41, vergleiche Figur 2, mit den die kleinere Montageöffnung 60 umgebenden Befestigungsstellen 61 zur Überdeckung gebracht, so dass eine Fixierung des Montageträgers 40 an der Türinnenhaut 6 durch geeignete Befestigungsmittel, z. B. in Form von Schrauben oder Nieten, erfolgen kann. Hierdurch wird zugleich die kleinere Montageöffnung 60 der Türinnenhaut 6 durch den Montageträger 40 verschlossen.

Ferner werden die durch die erste Führungsschiene 1 und den Schlossträger 10 gebildete Baueinheit sowie die zweite Führungsschiene 2 über geeignete Befestigungsstellen an der Türinnenhaut 6 fixiert. Abschließend wird dann die größere Montageöffnung 62 durch eine geeignete Abdeckplatte ebenfalls verschlossen, um eine feuchtigkeitsdichte Trennung des Trockenraums vom Nassraum der Fahrzeugtür zu gewährleisten.

Für den Fall, dass der innerhalb des Türkastens, also auf der dem Fahrzeuginnenraum abgewandten Seite der Türinnenhaut zur Verfügung stehende Montagefreiraum, insbesondere quer zur Türebene, für die Montage einer bereits mit dem Motor 42 und der Steuereinheit 43 ausgerüsteten Montageträger 40 nicht ausreicht, können der Motor 42 und die Steuereinheit 43 auch separat auf der Trockenraumseite, also der in Figur 4a erkennbaren dem Fahrzeuginnenraum zugewandten Seite der Türinnenhaut 6 festgelegt werden, nachdem der Montageträger 40 die kleinere Montageöffnung 60 überdeckend an der Türinnenhaut 6 festgelegt wurde.

Alternativ zu dem vorbeschriebenen Montageverfahren kann bei einer Kraftfahrzeugtür mit einem abnehmbaren Türaußenblech das in Figur 4 dargestellte Verstellsystem direkt von der Nassraumseite, also auf der in Figur 4a nicht erkennbaren Seite des Türinnenblechs 6, auf dieses aufgesetzt werden, wobei der Motor 42 und die Steuereinheit 43 des Verstellantriebs 4 durch die kleinere Montageöffnung 60 der Türinnenhaut 6 in den Trockenraum gefädelt werden und wobei wiederum die Montageplatte 40 mit ihren Befestigungsstellen 41 bezüglich der Befestigungsstellen 61 der kleinen Montageöffnung 60 in Überdeckung gebracht wird, so dass eine Fixierung des Montageträgers 40 mit geeigneten Befestigungsmitteln erfolgen kann. Sodann werden wiederum die aus der ersten Führungsschiene 1 und dem Schlossträger 10 bestehende Baueinheit sowie die zweite Führungsschiene 2 an der Türinnenhaut fixiert. Die größere Montageöffnung 62 der Türinnenhaut 6 ist in diesem Fall überflüssig und kann entfallen.

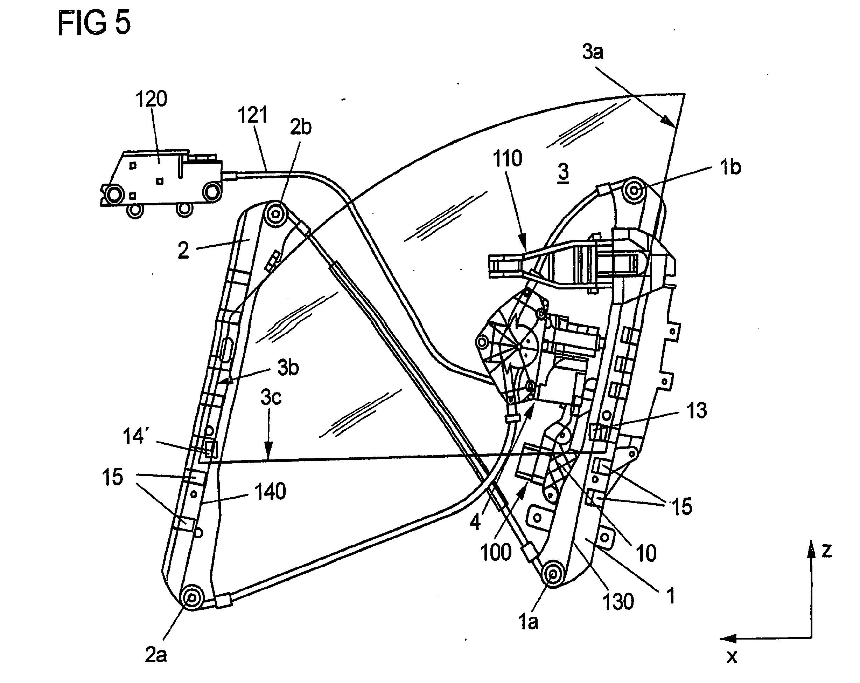

Figur 5 zeigt eine Abwandlung des Verstellsystems aus Figur 4, bei der beide Führungsschienen, also sowohl die erste Führungsschiene 1 als auch die zweite Führungsschiene 2 durch abgewinkelte Stege gebildete Umgriffsbereiche für jeweils eine der beiden seitlichen Scheibenkanten 3a, 3b der zu verstellenden Fensterscheibe aufweisen, so dass sowohl die erste Führungsschiene 1 als auch die zweite Führungsschiene 2 jeweils einen Führungskanal für eine seitliche Scheibenkante 3a bzw. 3b der Fensterscheibe 3 aufweist. Dadurch dass die erste Führungsschiene 1 einerseits und die zweite Führungsschiene 2 andererseits mit ihren jeweiligen Umgriffsbereichen 15 die jeweils zugeordnete seitliche Scheibenkante 3a bzw. 3b in entgegengesetzter Richtung umgreifen, also die durch die Umgriffsbereiche 15 gebildeten Führungskanäle der ersten Führungsschiene 1 und der zweiten Führungsschiene 2 einander gegenüberliegen und dabei mit den offenen Seiten einander zugewandt sind, bilden beide Führungskanäle gemeinsam eine Zwangsführung für die zu verstellende Fensterscheibe, die lediglich in der Verstellrichtung z nicht aber senkrecht hierzu beweglich ist.

Bei diesem Ausführungsbeispiel sind beide Mitnehmer 13, 14' also sowohl der entlang der ersten Führungsschiene 1 geführte Mitnehmer 13 als auch der entlang der zweiten Führungsschiene 2 geführte Mitnehmer 14' jeweils als lose entlang der zugeordneten Führungsschiene 1 bzw. 2 geführte Mitnehmer ausgebildet, die nicht in die zugeordnete Führungsschiene eingreifen und dementsprechend auch nicht an der Führungsschiene zwangsgeführt sind. Die Zwangsführung der Fensterscheibe 3 in Verstellrichtung z wird also bei dem Fensterheber des in Figur 5 dargestellten Verstellsystems nicht durch die Zwangsführung zumindest eines der Mitnehmer 13, 14' erreicht, sondern vielmehr ausschließlich durch die Zwangsführung der Fensterscheibe 3 mit ihren seitlichen Scheibenkanten 3a, 3b in jeweils einer der beiden Führungsschienen 1, 2 bzw. deren jeweiligem Führungskanal.

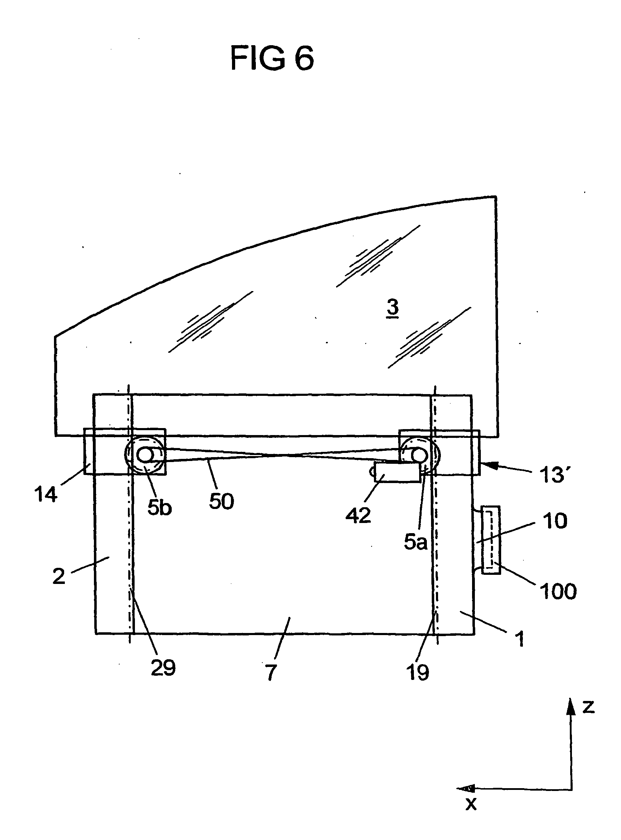

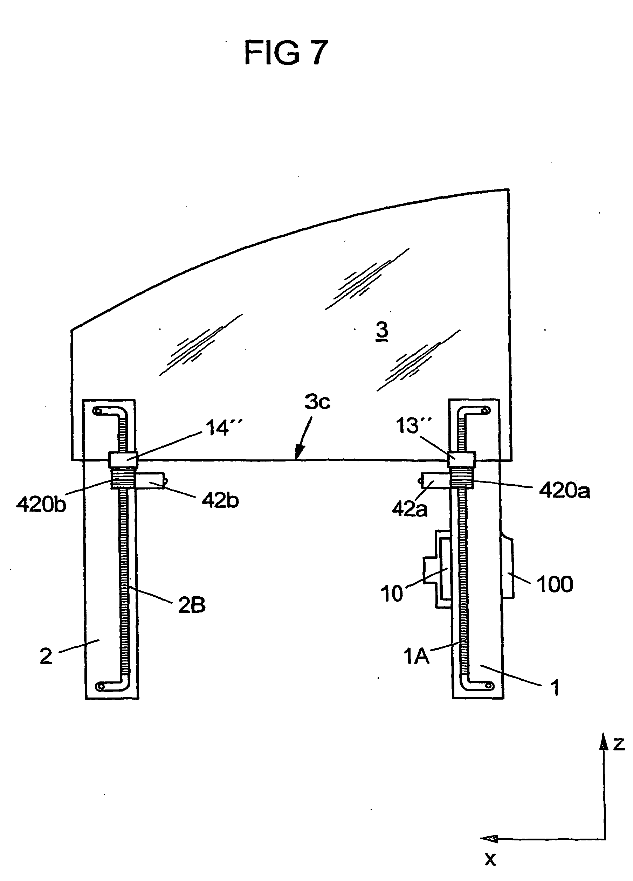

Die nachfolgend anhand der Figuren 6 und 7 gezeigten Ausführungsformen eines Verstellsystems für eine Kraftfahrzeugtür zeigen jeweils insofern kein Ausführungsbeispiel der Erfindung, als dort am Führungsbereich des Fensterhebers kein Umgriffsbereich zur Führung einer seitlichen Scheibenkante der zu verstellenden Fensterschiebe vorgesehen ist.

In Figur 6 ist schematisch ein Verstellsystem mit einem doppelsträngigen Zahnstangenfensterheber dargestellt, der zwei in Verstellrichtung z der Fensterscheibe erstreckte, mit einer Längsverzahnung 19 bzw. 29 versehene Führungsschienen 1, 2 umfasst, die quer zur Verstellrichtung z voneinander beabstandet auf einem Modulträger bzw. Aggregateträger 7 angeordnet sind und mit einem an der ersten Führungsschiene 1 fixierten, d. h. einstückig angeformten oder als separate Komponente befestigten Schlosshalter 10 eine einheitliche Baugruppe bilden, die beispielsweise aus Kunststoff bestehen kann.

In die Verzahnungen 19, 29 der beiden Führungsschienen 1, 2 greift jeweils ein Getriebeelement 5a, 5b in Form eines Zahnrades ein, das wiederum auf einem verschieblich an der jeweiligen Führungsschiene 1 bzw. 3 geführten Mitnehmer 13' oder 14 drehbar gelagert ist. Einem der Getriebeelemente 5a, nämlich dem der ersten Führungsschiene 1 zugeordneten Zahnrad, ist ein Antriebsmotor 42 zugeordnet, der das entsprechende Getriebeelement antreibt, also im Betrieb eine Drehung des zugeordneten Zahnrades 5a auslöst. Dieses ist wiederum über ein Transmissionselement 50 in Form eines Zahnriemens mit dem anderen Getriebeelement 5b in Form eines Zahnrades wirkverbunden, so dass im Betrieb des Motors 42 auch das der zweiten Führungsschiene 2 zugeordnete Getriebeelement 5b in Form eines Zahnrades angetrieben wird. Je nach Drehrichtung der beiden Zahnräder 5a, 5b werden die zugehörigen Mitnehmer 13' bzw. 14 entlang der zugeordneten Führungsschiene 1 bzw. 2 angehoben oder abgesenkt. Dies führt zu einem Anheben oder Absenken der Fensterscheibe 3, die mit ihrer Unterkante an den beiden Mitnehmern 13', 14 in bekannter Weise befestigt ist.

Der mit der ersten Führungsschiene 1 verbundene Schlossträger 10 kann dabei auch ein Teil des Schlossgehäuses oder eines sonstigen Gehäuses, z. B. eines Gehäuses einer elektronischen Steuerungseinheit bilden.

Zu beachten ist bei dieser Ausführungsform eines Verstellsystems, dass die erste Führungsschiene 1 und der Schlossträger 10 nicht etwa deswegen eine vorgefertigte Baueinheit bilden, weil sie gemeinsam auf einem Modulträger bzw. Aggregateträger 7 angeordnet sind. Entscheidend ist vielmehr, dass die erste Führungsschiene 1 und der Schlossträger 10 unmittelbar zu einer Baueinheit zusammengefasst sind, also entweder unmittelbar aneinander befestigt sind oder Bestandteile einer einstückig geformten Baueinheit bilden.

Figur 7 zeigt ein Ausführungsbeispiel des Verstellsystems, bei dem sowohl an der ersten Führungsschiene 1 als auch an der zweiten Führungsschiene 2 jeweils eine in Verstellrichtung z erstreckte Spindel 1A bzw. 2B drehfest angeordnet ist und auf jeder der beiden Spindeln 1A, 2B eine durch einen zugeordneten Motor 42a bzw. 42b drehbare Spindelmutter 420a, 420b gelagert ist, die bei einer durch den jeweiligen Rotor 42a oder 42b ausgelösten Drehbewegung gleichzeitig eine Längsbewegung entlang der zugeordneten Spindel 1a oder 1 b ausführt. Jeder der beiden Spindelmuttern 420a, 420b ist neben einem mitfahrenden Motor 42a bzw. 42b ein Mitnehmer 13" bzw. 14" zugeordnet, der im Bereich der Scheibenunterkante 3c mit der zu verstellenden Fensterscheibe 3 verbunden ist und bei einer Längsbewegung der jeweiligen Spindelmutter 420a bzw. 420b in Verstellrichtung mitgenommen wird und hierbei die Verstellbewegung auf die Fensterscheibe 3 überträgt.

Die erste Führungsschiene 1 ist dabei wiederum als Baueinheit mit einem Schlossträger 10 ausgeführt, an dem ein Türschloss 100 befestigt ist.

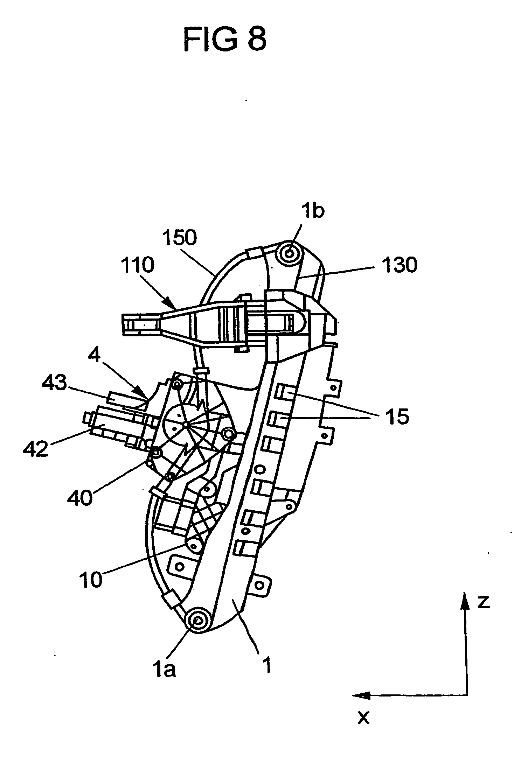

Figur 8 zeigt in Abwandlung der bisherigen Ausführungsbeispiele, insbesondere des Verstellsystems gemäß Figur 4, einen einsträngigen Fensterheber, der lediglich eine einzelne Führungsschiene 1 umfasst, wobei diese wiederum eine Baueinheit mit dem Schlossträger 10 bildet. Die durch den Schlossträger 10 und die eine Führungsschiene 1 gebildete Baueinheit einschließlich der daran befestigten Komponenten ist im Wesentlichen identisch ausgeführt wie bei dem Ausführungsbeispiel aus Figur 4. So weist die eine Führungsschiene 1 einen durch eine Mehrzahl Umgriffsbereiche 15 gebildeten Führungskanal für eine seitliche Scheibenkante auf und die durch die Führungsschiene 1 und den Schlossträger 10 gebildete Baueinheit trägt auch den Verstellantrieb 4 sowie einen Außengriffhalter 110.

Im Unterschied zu dem in Figur 4 dargestellten Ausführungsbeispiel weist der einsträngige Fensterheber aus Figur 8 jedoch keine zweite Führungsschiene 2 auf. Ferner ist in Figur 4 der Türinnenöffner nicht mit dargestellt. Aufgrund des Entfallens der zweiten Führungsschiene ist es bei dem in Figur 8 gezeigten Ausführungsbeispiel eines Verstellsystems vorteilhaft, wenn die eine Führungsschiene 1 derart ausgebildet ist, dass sie die Zwangsführung eines zugeordneten Mitnehmers in Verstellrichtung z ermöglicht.

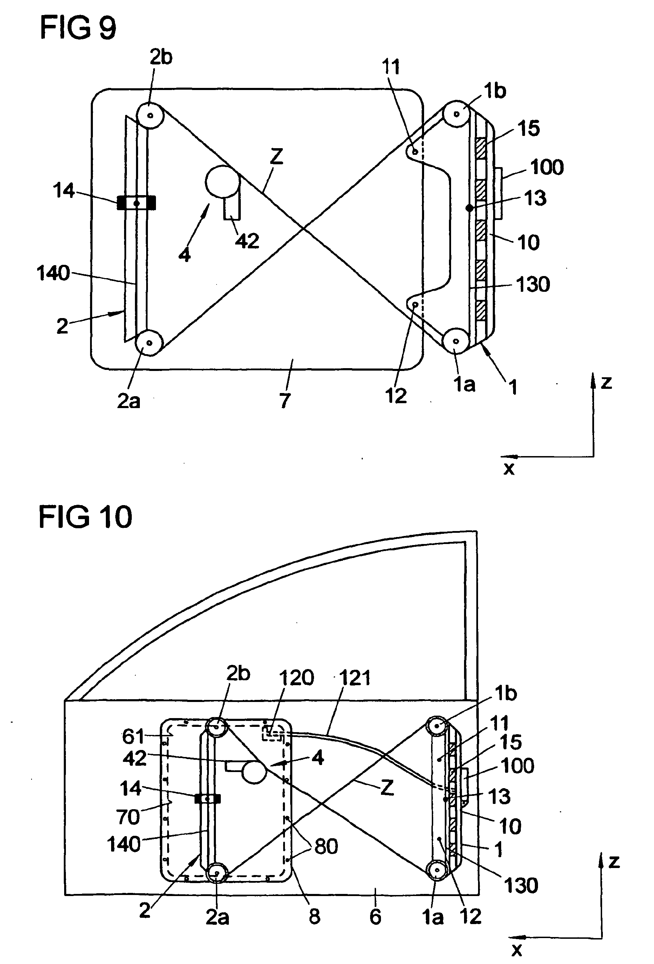

Nachfolgend sind anhand der Figuren 9 bis 19a schematisch Verstellsysteme der anhand der Figuren 1 bis 8 erläuterten Art zusammen mit weiteren Komponenten der Türkarosserie dargestellt, um unterschiedliche Möglichkeiten der Integration und Montage der Verstellsysteme an einem Kraftfahrzeug zu erläutern.

Bei der Beschreibung der Figuren 9 bis 19a wird auf den Aufbau der Verstellsysteme an sich nur insoweit eingegangen werden, als dies für die Integration in die jeweiligen Komponenten der Türkarosserie von Bedeutung ist. Im Übrigen wird hinsichtlich des Aufbaus des jeweiligen Verstellsystems, die in den Figuren 9 bis 19a - verglichen mit der detaillierteren Darstellung in den Figuren 1 bis 8 - ohnehin nur schematisch gezeigt sind, auf die Ausführungen zu den Figuren 1 bis 8 verwiesen.

Bei dem in Figur 9 gezeigten Ausführungsbeispiel ist die aus der ersten Führungsschiene 1 und dem Schlossträger 2 vorgefertigte Baueinheit über Befestigungsstellen 11, 12 an einem Aggregateträger 7 befestigt, in den gleichzeitig die zweite Führungsschiene 2 des Fensterhebers integriert ist. Besonders vorteilhaft ist dabei die Verwendung von Kunststoff als Material für den Aggregateträger 7, wobei die zweite Kunststoffschiene 2 in einfacher Weise einstückig an dem Träger 7 angeformt sein kann. Der am Zugmittel Z des Fensterhebers angreifende Verstellantrieb 4 wird vorteilhaft am Türmodul- bzw.

Aggregateträger 7 vormontiert, wobei in bekannter Weise eine Anordnung der elektrischen und elektronischen Komponenten auf der Trockenraumseite und der rein mechanischen Komponenten auf der Nassraumseite des Aggregateträgers 7 vorgesehen sein kann.

Bei dem in Figur 10 gezeigten Ausführungsbeispiel eines an einer Kraftfahrzeugtür angeordneten Verstellsystems weist die Türinnenhaut 6 einer Kraftfahrzeugtür einen Ausschnitt 61 auf, der mittels eines Modulträgers 8 überdeckt ist. Dieser Modulträger 8 trägt sowohl die zweite Führungsschiene 2 als auch den Verstellantrieb 4 des Fensterhebers, wobei die zweite Führungsschiene 2 gegebenenfalls einstückig an dem Türmodulträger 8 angeformt sein kann. Ferner kann der Modulträger 8 zur Aufnahme des Türinnenöffners 120 vorgesehen sein.

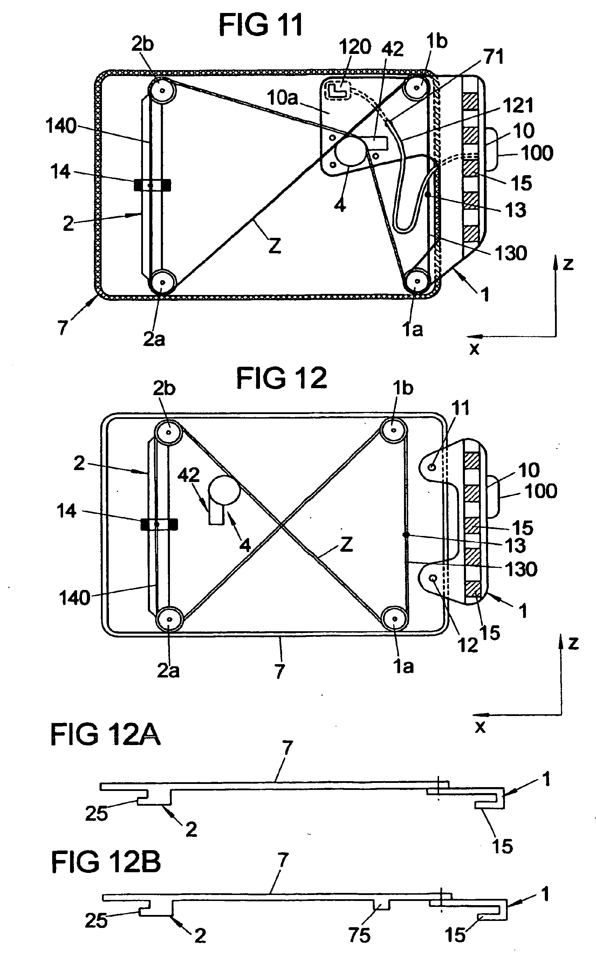

Zur Befestigung des Modulträgers 8 an der Türinnenhaut 6 dienen am Rand des Modulträgers 8 verteilte Befestigungsstellen 80, z. B. in Form von Befestigungsöffnungen, durch die hindurch der Modulträger 8 durch Nieten oder Schrauben an der Türinnenhaut 6 befestigbar ist. Gemäß Figur 11 dient zur Aufnahme des Verstellsystems ein aus einem hochfesten Material, z. B. Stahl, bestehender Aggregateträger 7, auf dem insbesondere sämtliche Umlenkelemente 1a, 1b; 2a, 2b in Form von Umlenkrollen des Fensterhebers gelagert sind. Hierdurch können die an den Umlenkrollen 1a, 1b; 2a, 2b auftretenden Seilkräfte unmittelbar in den hochstabilen Aggregateträger 7 eingeleitet werden, der wiederum mit der Türkarosserie eines Kraftfahrzeugs verbunden ist.

An dem Aggregateträger 7 ist einerseits die aus der ersten Führungsschiene 1 und dem Schlossträger 10 sowie den daran montierten Komponenten, wie z. B. dem Verstellantrieb 4 und dem Schloss 100, bestehende Baueinheit festgelegt und andererseits auch die zweite Führungsschiene 2. Zur Aufnahme des Verstellantriebs 4 weist die die erste Führungsschiene 1 und den Schlossträger 10 umfassende Baueinheit einen entsprechenden Aufnahmebereich 10a auf. Dieser kann ferner zur Aufnahme des Türinnenöffners 120 in einer Park- bzw. Transportposition dienen, aus der er bei der abschließenden Montage der Kraftfahrzeugtür in seine endgültige Funktionsposition überführt wird.

In Figur 12 ist eine Abwandlung des Ausführungsbeispieles aus Figur 9 dargestellt, bei dem die der ersten Führungsschiene 1 zugeordneten Umlenkelemente 1 a, 1b sowie der durch diese Umlenkelemente definierte, parallel zur ersten Führungsschiene verlaufende Seilabschnitt 130 mit dem zugehörigen Mitnehmer 13 quer zur Verstellrichtung z der Fensterscheibe von der ersten Führungsschiene 1 beabstandet sind. Die Führung der einen seitlichen Scheibenkante der zu verstellenden Fensterscheibe in der ersten Führungsschiene 1 sowie die Kopplung der Fensterscheibe an den Fensterheber über den der ersten Führungsschiene 1 zugeordneten Mitnehmer 13 sind in diesem Fall also räumlich getrennt. Insbesondere sind die der ersten Führungsschiene 1 zugeordneten Umlenkelemente 1a, 1b von der Führungsschiene 1 beabstandet unmittelbar am Aggregateträger 7 befestigt.

Figur 12a zeigt einen Querschnitt durch die Anordnung gemäß Figur 12, aus dem hervorgeht, dass die zweite Führungsschiene 2 vorteilhaft am Aggregateträger 7 einstückig angeformt sein kann und mindestens einen abgewinkelten Abschnitt 25 aufweist, um einen formschlüssigen Eingriff mit dem zugeordneten Mitnehmer 14 herzustellen. Figur 12b zeigt eine Abwandlung des Querschnittes gemäß Figur 12a, wonach an dem Aggregateträger 7 ein zusätzlicher in Verstellrichtung z erstreckter Führungsbereich 75 vorgesehen, insbesondere angeformt, ist, der zur Führung des neben der ersten Führungsschiene 1 verlaufenden Mitnehmers 13 dienen kann.

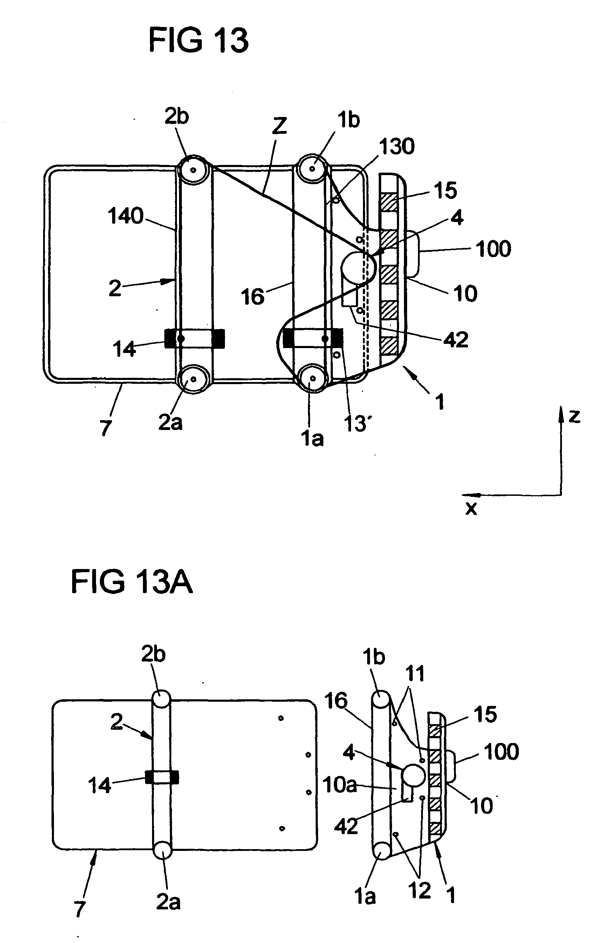

In den Figuren 13 und 13a ist eine Anordnung dargestellt, bei der die zweite Führungsschiene 2 des Fensterhebers auf einem bevorzugt aus einem hochfesten Material, z. B. Stahl, bestehenden Aggregateträger 7 angeordnet ist.

An diesem Aggregateträger ist über geeignete Befestigungsstellen 11, 12 außerdem die die erste Führungsschiene 1 und den Schlossträger 10 umfassende Baueinheit festlegbar. Diese trägt darüber hinaus auch den Verstellantrieb 4 des Fensterhebers.

Ferner ist an jener Baueinheit 1,10 ein zusätzlicher Führungsbereich 16 vorgesehen, der zur Führung des der ersten Führungsschiene 1 zugeordneten Mitnehmers 13' in einem Abstand zu jener ersten Führungsschiene 1 dient. Der der ersten Führungsschiene 1 zugeordnete, jedoch in einem Abstand von dieser auf einem separaten Führungsbereich 16 geführte Mitnehmer 13' kann dabei insbesondere zum formschlüssigen Eingriff in den zusätzlichen Führungsbereich 16 ausgebildet und vorgesehen sein. Der zusätzliche Führungsbereich 16 ist dabei von der ersten Führungsschiene 1 her gesehen jenseits des Verstellantriebs 4 angeordnet. Die beiden der ersten Führungsschiene 1 zugeordneten Umlenkelemente 1a, 1b in Form von Umlenkrollen befinden sich an dem unteren und oberen Ende des zusätzlichen Führungsbereiches 16.

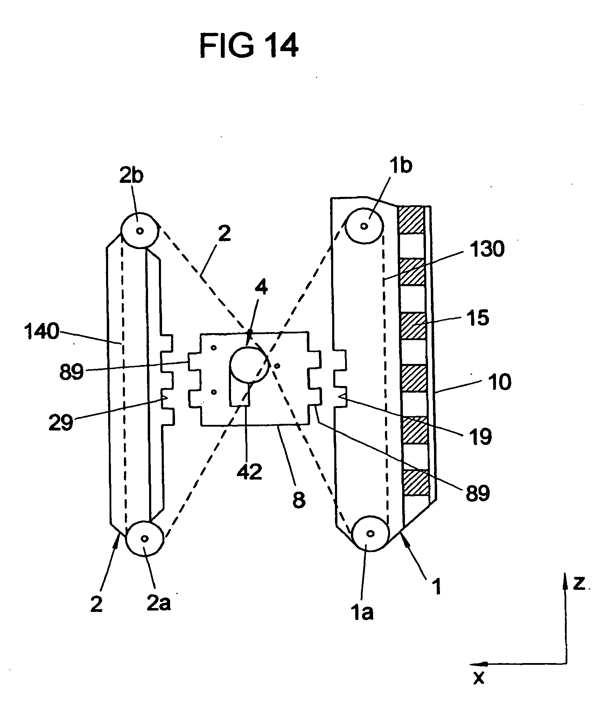

Figur 14 zeigt ein aus drei Baueinheiten (Modulen) zusammensetzbares Verstellsystem mit einer ersten Baueinheit, die insbesondere die erste Führungsschiene 1 sowie den Schlossträger 10 umfasst; mit einer zweiten Baueinheit, die insbesondere die zweite Führungsschiene 2 umfasst; sowie mit einer dritten Baueinheit, die einen den Verstellantrieb 4 tragenden Modulträger 8 umfasst. Die drei Baueinheiten bzw. Module sind über einander zugeordnete Steckbereiche 19, 89; 29, 89 zusammensteckbar, so dass sie im zusammengesteckten Zustand transportiert und an einer Türkarosserie befestigt werden können. Hierbei können für die einzelnen Baueinheiten gezielt solche Materialien gewählt werden, die für den jeweiligen Einsatzzweck besonders vorteilhaft sind. Bei einer Herstellung der tragenden Komponenten der einzelnen Baueinheiten jeweils aus Kunststoff ist beispielsweise für die beiden Führungsschienen 1, 2 ein hinreichend harter Kunststoff zu wählen, damit dort die Verstellkräfte aufgenommen werden können. Der zur Aufnahme des Verstellantriebs 4 dienende Modulträger wird demgegenüber bevorzugt aus einem Kunststoff gefertigt, der im Hinblick auf die Lagerung von Getriebeelementen des Verstellantriebs 4 optimiert ist.

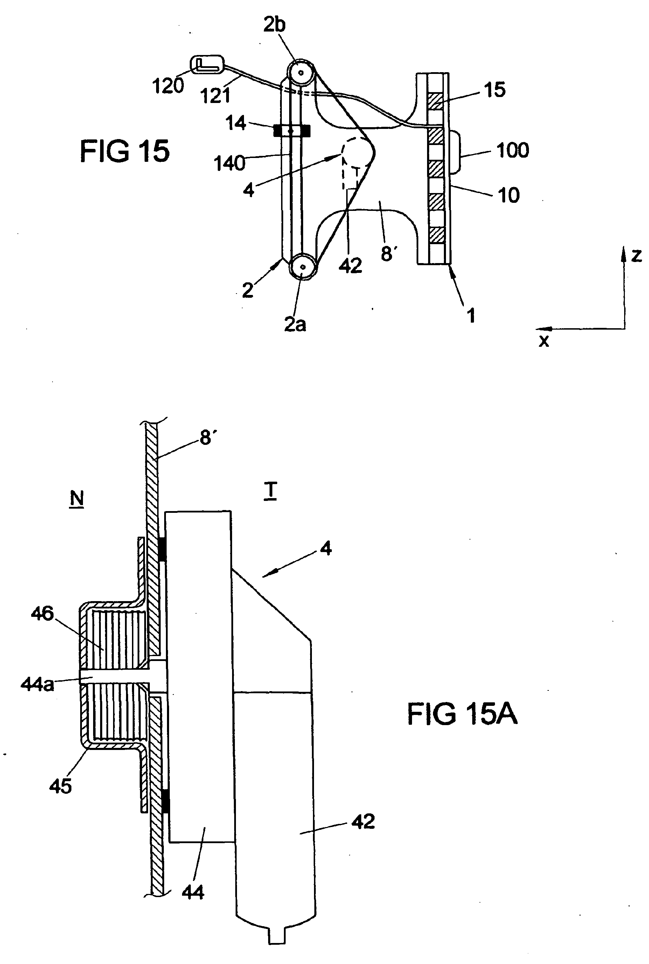

In Figur 15 ist eine Abwandlung des in Figur 14 gezeigten Verstellsystems dargestellt, bei der die aus der ersten Führungsschiene 1 und dem Schlossträger 10 bestehende Baueinheit mit der zweiten Führungsschiene 2 über einen einstückig angeformten Verbindungsbereich 8' miteinander verbunden ist, der den zwischen den beiden Führungsschienen 1, 2 liegenden Verstellantrieb aufnimmt. Hierbei können bevorzugt die beiden Führungsschienen 1, 2, der Schlossträger 10 und auch der Verbindungsbereich 8' aus Kunststoff geformt sein.

Figur 15a zeigt einen Querschnitt durch das Verstellsystem gemäß Figur 15 im Bereich des Verstellantriebs 4. Es ist erkennbar, dass der Antriebsmotor 42 und ein mit dem Antriebsmotor zusammenwirkendes Motorgetriebe 44 im so genannten Trockenraum T, also vor der dem Fahrzeuginnenraum zuzuwendenden Oberfläche des Verbindungsbereiches 8' angeordnet sind. Eine Abtriebswelle 44a des Motorgetriebes 44 durchgreift dabei eine Öffnung in dem Verbindungsbereich 8' und ist drehfest mit einer auf der Nassraumseite N, also der dem Fahrzeugaußenraum zuzuwendenden Oberfläche, des Verbindungsbereiches 8' gelagerten Seiltrommel 46 verbunden. Im Betrieb des Antriebsmotors 42 werden die Abtriebswelle 44a und die Seiltrommel 46 gedreht, so dass ein die Seiltrommel umschlingendes Zugmittel Z, vergleiche Figur 15, zur Einstellung einer mittels des Fensterhebers verstellbaren Fensterscheibe betätigt wird. Die Seiltrommel 46 ist dabei in einem am Verbindungsbereich 8' angeordneten Lagerdeckel 45 aufgenommen.

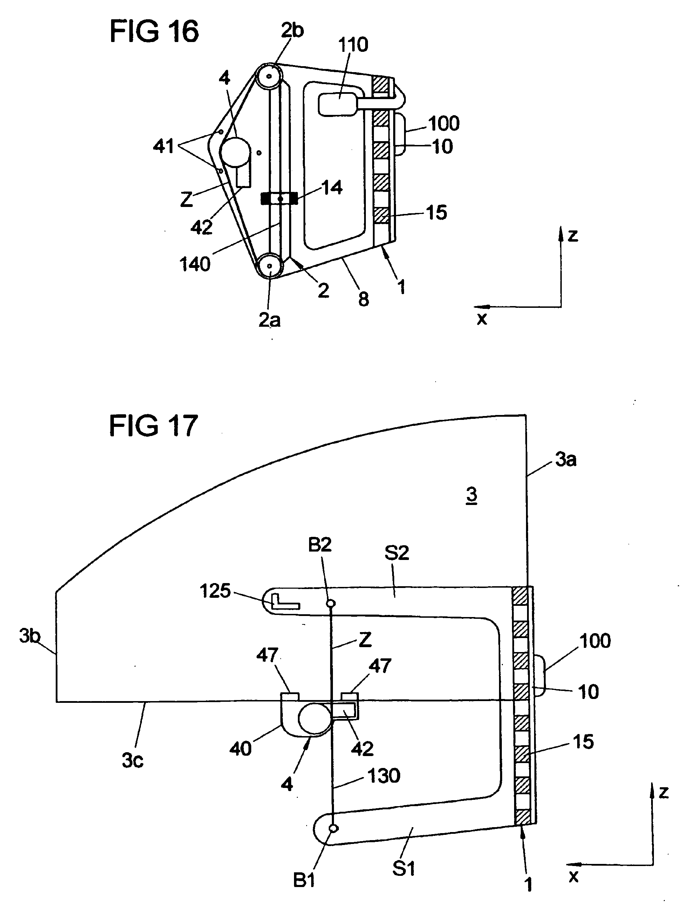

In dem Ausführungsbeispiel eines Verstellsystems gemäß Figur 16 ist wiederum die durch die erste Führungsschiene 1 und den Schlossträger 10 gebildete Baueinheit über einen Verbindungsbereich 8 einstückig mit einer die zweite Führungsschiene 2 aufnehmenden Baueinheit verbunden. Letztere trägt zugleich den Verstellantrieb 4, der über geeignete Befestigungsmittel 41 jenseits der beiden Führungsschienen 1, 2 neben der zweiten Führungsschiene 2 festgelegt ist.

Der Fensterheber ist gemäß Figur 16 als ein einsträngiger Fensterheber ausgebildet, wobei der einzige in Verstellrichtung z erstreckte und mit einem Mitnehmer 14 versehene Abschnitt 140 des Zugmittels Z entlang der einer schlossabgewandten Führungsschiene 2 verläuft.

Die aus der ersten Führungsschiene 1 und dem Schlossträger 10 bestehende Baueinheit bildet dabei auch noch eine Schnittstelle für einen Türaußengriffhalter 110.

Figur 17 zeigt ein Verstellsystem mit einem Fensterheber mit einem so genannten mitfahrenden Verstellantrieb 4, der über zwei Laschen 47 an der unteren Scheibenkante 3c der zu verstellenden Fensterscheibe 3 befestigt ist.

Der Verstellantrieb 4 steht über eine vom Antriebsmotor 42 angetriebene Seiltrommel mit einem flexiblen Zugmittel Z, z. B. in Form eines Seiles, in Wirkverbindung, das zwischen zwei Befestigungsstellen B1, B2 fest eingespannt ist und sich in Verstellrichtung z der zu verstellenden Fensterscheibe 3 erstreckt. Die beiden Befestigungsstellen B1, B2 für das flexible Zugmittel Z sind an zwei Schenkeln S1, S2 vorgesehen, die einstückig an der durch eine Führungsschiene 1 und einen Schlossträger 10 gebildeten Baueinheit angeformt sind und derart von dieser abstehen, dass sie sich in einer Richtung x senkrecht zur Verstellrichtung z bis zu dem Verstellantrieb 4 erstrecken, der im mittleren Bereich der unteren Scheibenkante 3c befestigt ist. Der obere Schenkel S2 weist zudem noch einen Griffhalter 125 für einen Türinnengriff auf.

Die beiden Befestigungsstellen B1, B2, über die das flexible Zugmittel Z an den beiden Schenkeln S1, S2 der die Führungsschiene 1 und den Schlossträger 10 umfassenden Baueinheit festgelegt ist, dienen zugleich auch zur Befestigung dieser Baueinheit an der Kraftfahrzeugkarosserie, so dass die im Betrieb des Fensterhebers am Zugmittel Z auftretenden Verstellkräfte unmittelbar in die Türkarosserie abgeleitet werden können.

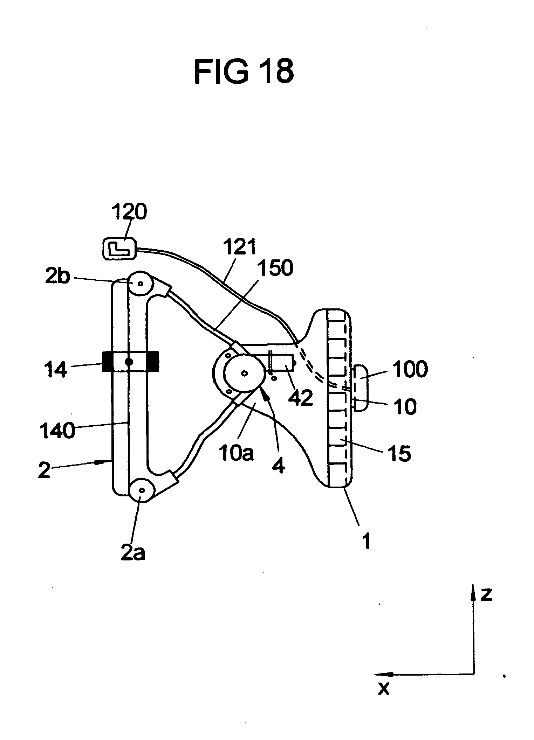

Figur 18 zeigt eine weitere Ausführungsform des Verstellsystems mit einem einsträngigen Fensterheber, bei der die aus der ersten Führungsschiene 1 und dem Schlossträger 10 gebildete Baueinheit einstückig angeformt einen Aufnahmebereich 10a für den Verstellantrieb 4 des Fensterhebers aufweist. Dieser treibt ein bereichsweise in einer Bowdenhülle 150 geführtes Zugmittel an, das sich mit einem Abschnitt 140 entlang der zweiten Führungsschiene 2 erstreckt und dort mit einem in Verstellrichtung z verschieblich geführten Mitnehmer in Eingriff steht, der formschlüssig auf der zweiten Führungsschiene 2 geführt ist.

Dadurch dass die die erste Führungsschiene 1 umfassende Baueinheit 1, 10 sowie die zweite Führungsschiene 2 lediglich über das in der Bowdenhülle 150 geführte flexible Zugmittel des Fensterhebers miteinander verbunden sind, lässt sich das in Figur 18 gezeigte Verstellsystem zum Transport platzsparend zusammenklappen.

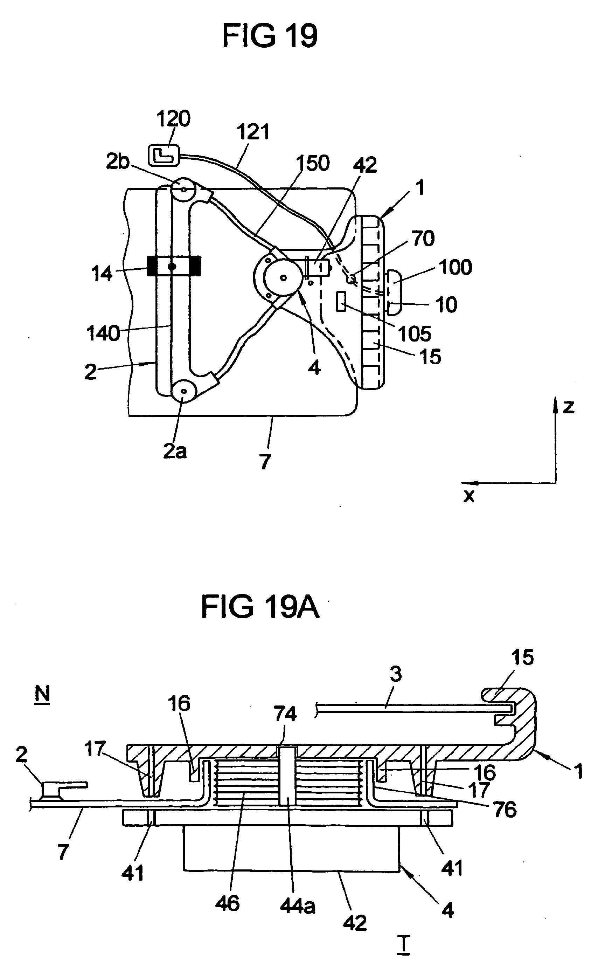

In den Figuren 19 und 19a ist ein Verstellsystem der in Figur 18 dargestellten Art in einem Zustand dargestellt, in dem die die erste Führungsschiene 1 und den Schlossträger 10 umfassende Baueinheit sowie die zweite Führungsschiene 2 auf einem Aggregateträger 7 vormontiert sind. Dabei steht die die erste Führungsschiene 1 und den Schlossträger 10 umfassende Baueinheit teilweise seitlich über den Aggregateträger 7 über und weist in dem überstehenden Bereich eine gedichtete Öffnung 70 auf, durch die hindurch das den Türinnenöffner 120 mit dem Türschloss 100 verbindende Kraftübertragungselement 121 in Form eines Bowdenzugs (vom Nassraum in den Trockenraum) geführt ist. Ferner ist an jener Baueinheit 1, 10 eine Steckerleiste 105 zum elektrischen Anschluss des Türschlosses 100 integriert.

Anhand Figur 19a (Querschnittsdarstellung im Bereich des Verstellantriebs 4) wird ferner deutlich, dass der Antriebsmotor 42 des Verstellantriebs 4 einerseits und eine vom Antriebsmotor 42 angetriebene Seiltrommel 46 andererseits auf unterschiedlichen Seiten des Aggregateträgers 7, nämlich einerseits auf dessen dem Trockenraum T zugewandter Seite und andererseits auf dessen dem Nassraum N zugewandter Seite angeordnet sind. Dabei ist an dem Aggregateträger 7 ein Durchzug in Form eines hohlzylindrischen Abschnittes 76 geformt, der zur Lagerung der Seiltrommel 46 dient, die drehfest auf einer vom Motor 42 antreibbaren Abtriebswelle 44a befestigt ist.

Die die Führungsschiene 1 sowie den Schlossträger 10 umfassende Baueinheit bildet dabei einen Lagerdeckel für die Seiltrommel 46 mit einer Lageröffnung 74 für die Antriebswelle 44a, mit einer hohlzylindrischen Aufnahme 16 für den Durchzug 76 des Aggregateträgers 7 und mit Vorsprüngen, die Befestigungslöcher 17 aufweisen, die zur Befestigung des Verstellantriebs 4 mit Befestigungsöffnungen 41 fluchten, die auf der dem Lagerdeckel abgewandten Seite des Aggregateträgers 7 an einem Befestigungsflansch des Verstellantriebs 4 vorgesehen sind.

Ferner wird anhand Figur 19a deutlich, dass die zweite Führungsschiene 2 als separate Komponente an dem Aggregateträger 7 befestigt ist und mit einem seitlich abgewinkelten Abschnitt einen formschlüssigen Führungsbereich für den Mitnehmer 14 (vergleiche Figur 19) bildet.

Bei allen gezeigten Ausführungsbeispielen eines Verstellsystems ist von Bedeutung, dass sich sämtliche Komponenten des jeweiligen Verstellsystems vor dem Einbau in eine Kraftfahrzeugtür zu einer vormontierten Baugruppe zusammenfassen lassen und dabei komplett vorprüfbar sind, also etwa die Funktion des Fensterhebers durch Bestromung des Antriebsmotors sowie die Funktion des Schließsystems durch Überprüfung des Zusammenwirkens der einzelnen Komponenten des Schließsystems.

## Patentansprüche

1. Verstellsystem für eine Kraftfahrzeugtür mit
- einem Fensterheber zum Verstellen einer Fensterscheibe, der mindestens ein in Verstellrichtung (z) der Fensterscheibe (3) längserstrecktes Kraftübertragungselement (1A, 2B; 19, 29; 130, 140) aufweist, über das die zu verstellende Fensterscheibe mit einem Verstellantrieb des Fensterhebers gekoppelt ist, wobei durch das Kraftübertragungselement (1A, 2B; 19, 29; 130, 140) ein Mitnehmer (13, 13', 14, 14') entlang der Verstellrichtung (z) der zu verstellenden Fensterscheibe (3) bewegt wird, der mit der zu verstellenden Fensterscheibe (3) verbunden ist,
- mindestens einem Führungsbereich (1) des Fensterhebers zur Führung der Fensterscheibe (3) entlang einer Verstellrichtung (z),
- einem Türschloss (100) und
- einem Schlossträger (10), an dem das Türschloss (100) außerhalb einer Kraftfahrzeugtür vormontierbar ist,
wobei der Führungsbereich (1) des Fensterhebers und der Schlossträger (10) derart fest miteinander verbunden sind, dass der Führungsbereich (1) und der Schlossträger (10) eine Baueinheit bilden,
**dadurch gekennzeichnet,**
**dass** der mit dem Schlossträger (10) zu einer Baueinheit zusammengefasste Führungsbereich (1) mindestens einen Umgriffsbereich (15) für eine seitliche Scheibenkante (3a) der zu verstellenden Fensterscheibe (3) aufweist, der von dem oder jedem Kraftübertragungselement (1A, 2B; 19, 29; 130, 140) quer zu der Verstellrichtung (z) beabstandet ist.

2. Verstellsystem nach Anspruch 1, **dadurch gekennzeichnet, dass** der Führungsbereich (1) und der Schlossträger (10) unmittelbar miteinander verbunden sind.

3. Verstellsystem nach Anspruch 1 oder 2, **dadurch gekennzeichnet, dass** der Führungsbereich (1) und der Schlossträger (10) unlösbar miteinander verbunden sind.

4. Verstellsystem nach einem der vorhergehenden Ansprüche, **dadurch gekennzeichnet, dass** der Führungsbereich (1) und der Schlossträger (10) einstückig aneinander angeformt sind.

5. Verstellsystem nach Anspruch 4, **dadurch gekennzeichnet, dass** der Führungsbereich (1) und der Schlossträger (10) ein einstückig geformtes KunststoffSpritzteil bilden.

6. Verstellsystem nach Anspruch 4, **dadurch gekennzeichnet, dass** der Führungsbereich (1) und der Schlossträger (10) ein einstückig geformtes Leichtmetall-Gussteil bilden.

7. Verstellsystem nach einem der vorhergehenden Ansprüchen, **dadurch gekennzeichnet, dass** die den Führungsbereich (1) und den Schlossträger (10) umfassende Baueinheit zumindest einen Teil eines Gehäuses für das Türschloss (100) aufweist.

8. Verstellsystem nach einem der vorhergehenden Ansprüche, **dadurch gekennzeichnet, dass** die den Führungsbereich (1) und den Schlossträger (10) umfassende Baueinheit zumindest einen Teil eines Gehäuses (40) für den Verstellantrieb (4) des Fensterhebers aufweist.

9. Verstellsystem nach einem der vorhergehenden Ansprüche, **dadurch gekennzeichnet, dass** die den Führungsbereich (1) und den Schlossträger (10) umfassende Baueinheit zumindest einen Teil eines Gehäuses für eine Steuereinheit (43) aufweist.

10. Verstellsystem nach einem der vorhergehenden Ansprüche, **dadurch gekennzeichnet, dass** die den Führungsbereich (1) und den Schlossträger (10) umfassende Baueinheit mindestens eines der folgenden Funktionselemente trägt:
- einen Außengriffhalter (110),
- einen Türinnenöffner (120),
- eine Abdeckung für das Türschloss (100),
- Führungsmittel (15) für eine seitliche Scheibenkante (3a) der zu verstellenden Fensterscheibe (3),
- den Verstellantrieb (4) für den Fensterheber,
- eine Steuereinheit (43) für den Fensterheber und/oder das Schloss (100),
- elektrische Leiterbahnen für die Stromversorgung und/oder zur Signalübertragung,
- eine Sensorik für den Fensterheber und/oder das Schloss (100),
- Mittel zum Schutz vor Feuchtigkeit und/oder
- Befestigungselemente, insbesondere in Form von Clipselementen, zur Fixierung einer Funktionskomponente an der Baueinheit.

11. Verstellsystem nach einem der vorhergehenden Ansprüche, **dadurch gekennzeichnet, dass** der Führungsbereich (1) des Fensterhebers und der Schlossträger (10) über einen deformierbaren Bereich miteinander verbunden sind, so dass die Lage des Schlossträgers (10) bezüglich des Führungsbereiches (1) durch Verformung des deformierbaren Bereiches zum Toleranzausgleich variierbar ist.

12. Verstellsystem nach Anspruch 11, **dadurch gekennzeichnet, dass** der Führungsbereich (1) und der Schlossträger (10) über einen biegeelastischen Bereich miteinander verbunden sind.

13. Verstellsystem nach Anspruch 11 oder 12, **dadurch gekennzeichnet, dass** der Führungsbereich (1) und der Schlossträger (10) über einen einstückig angeformten, deformierbaren Bereich miteinander verbunden sind.

14. Verstellsystem nach einem der vorhergehenden Ansprüche, **dadurch gekennzeichnet, dass** die den Führungsbereich (1) und den Schlossträger (10) umfassende Baueinheit Fixierungselemente aufweist, die zur temporären Fixierung zumindest einer der nachfolgend genannten Komponenten zum Zwecke der Transportsicherung vorgesehen sind:
- eines Türinnenöffners (120),
- des Verstellantriebs (4) für den Fensterheber,
- einer Steuereinheit (43) für den Fensterheber und/oder das Schloss (100),
- elektrischer Leiterbahnen für die Stromversorgung und/oder zur Signalübertragung,
- eines zweiten Führungsbereiches 2 für den Fensterheber.

15. Verstellsystem nach einem der vorhergehenden Ansprüche, **dadurch gekennzeichnet, dass** der Fensterheber als einsträngiger Fensterheber mit genau einem in Verstellrichtung (z) der zu verstellenden Fensterscheibe (3) längserstreckten Kraftübertragungselement (130, 140) ausgebildet ist, welches der Übertragung eines von dem Verstellantrieb (4) erzeugten Verstellmomentes auf die zu verstellende Fensterscheibe (3) dient.

16. Verstellsystem nach einem der Ansprüche 1 bis 14, **dadurch gekennzeichnet, dass** der Fensterheber als ein doppelsträngiger Fensterheber ausgebildet ist, der zwei parallel zueinander längserstreckte Kraftübertragungselemente (1A, 2B; 19, 29; 130, 140) aufweist, die der Übertragung eines vom Verstellantrieb (4) erzeugten Antriebsmomentes auf die zu verstellende Fensterscheibe (3) dienen.

17. Verstellsystem nach einem der vorhergehenden Ansprüche, **dadurch gekennzeichnet, dass** das mindestens eine Kraftübertragungselement (130, 140) als ein flexibles Kraftübertragungselement ausgebildet ist, insbesondere in Form eines Seiles oder eines schraubenförmig ausgebildeten biegeelastischen Elementes.

18. Verstellsystem nach einem der Ansprüche 1 bis 16, **dadurch gekennzeichnet, dass** das mindestens eine Kraftübertragungselement (1A, 2B; 19, 29) als ein starres Kraftübertragungselement ausgebildet ist, insbesondere in Form einer Zahnstange oder einer Spindel.

19. Verstellsystem nach einem der vorhergehenden Ansprüche, **dadurch gekennzeichnet, dass** entlang mindestens eines Führungsbereiches (1, 2) des Fensterhebers ein durch ein Kraftübertragungselement (1A, 2B; 19, 29; 130, 140) in Verstellrichtung (z) bewegbarer Mitnehmer (13, 14; 13', 14') angeordnet ist.

20. Verstellsystem nach Anspruch 19, **dadurch gekennzeichnet, dass** der Mitnehmer (13', 14) in Verstellrichtung (z) verschieblich in den zugeordneten Führungsbereich (1, 2) eingreift.

21. Verstellsystem nach Anspruch 19, **dadurch gekennzeichnet, dass** der Mitnehmer (13, 14') lose entlang des zugeordneten Führungsbereiches (1, 2) geführt ist.

22. Verstellsystem nach einem der vorhergehenden Ansprüche, **dadurch gekennzeichnet, dass** der mindestens eine Führungsbereich (1, 2) des Fensterhebers Mittel (1a, 1b, 2a, 2b) zur Umlenkung eines flexiblen Zugmittels (Z) trägt.

23. Verstellsystem nach Anspruch 22, **dadurch gekennzeichnet, dass** die Umlenkmittel als Umlenkrollen (1a, 1b, 2a, 2b) ausgebildet sind.

24. Verstellsystem nach Anspruch 22, **dadurch gekennzeichnet, dass** die Umlenkmittel als Gleitelemente ausgebildet sind, die bevorzugt einteilig an dem zugeordneten Führungsbereich (1, 2) angeformt sind.

25. Verstellsystem nach einem der Ansprüche 22 bis 24, **dadurch gekennzeichnet, dass** die Umlenkmittel (1a, 1b, 2a, 2b) auf dem zugeordneten Führungsbereich (1, 2) vormontiert sind und bei Befestigung des Verstellsystems an einer Türkarosserie unmittelbar mit der Türkarosserie verbunden werden.

26. Verstellsystem nach einem der vorhergehenden Ansprüche, **dadurch gekennzeichnet, dass** der Führungsbereich (1), eine Mehrzahl in Erstreckungsrichtung (z) des Führungsbereiches (1) hintereinander angeordnete Umgriffsbereiche (15) aufweist.

27. Verstellsystem nach einem der vorhergehenden Ansprüche **dadurch gekennzeichnet, dass** entlang des mit dem Schlossträger (10) zu einer Baueinheit zusammengefassten Führungsbereichs (1) ein Mitnehmer (13) lose geführt ist.

28. Verstellsystem nach einem der vorhergehenden Ansprüche, **dadurch gekennzeichnet, dass** mit einem weiteren, in Verstellrichtung (z) der Fensterscheibe (3) erstreckten Führungsbereichs (2) des Fensterhebers einem Mitnehmer (14) formschlüssig in Eingriff steht, der entlang der Verstellrichtung (z) der zu verstellenden Fensterscheibe (3) zwangsgeführt ist.

29. Verstellsystem nach einem der vorhergehenden Ansprüche, **dadurch gekennzeichnet, dass** zusätzlich zu dem mit dem Schlossträger (10) zu einer Baueinheit zusammengefassten Führungsbereich (1) ein weiterer in Verstellrichtung (z) der zu verstellenden Fensterscheibe (3) erstreckter Führungsbereich (2) vorgesehen ist, der näher am Massenschwerpunkt der Fensterscheibe (3) angeordnet ist als der andere Führungsbereich (1).

30. Verstellsystem nach Anspruch 29, **dadurch gekennzeichnet, dass** der näher am Massenschwerpunkt der zu verstellenden Fensterscheibe (3) angeordnete Führungsbereich (2) aus einem belastbaren Material besteht als der andere Führungsbereich (1).

31. Verstellsystem nach Anspruch 30, **dadurch gekennzeichnet, dass** der eine Führungsbereich (2) aus Metall und der andere Führungsbereich (1) aus Kunststoff besteht.

32. Verstellsystem nach einem der Ansprüche 29 bis 31, **dadurch gekennzeichnet, dass** der eine Führungsbereich (2) derart angeordnet ist, dass er zwischen 60 % und 80 % des Scheibengewichtes (G) trägt, und dass der andere Führungsbereich (1) derart angeordnet ist, dass er zwischen 20 % und 40 % des Scheibengewichtes (G) trägt.

33. Verstellsystem nach einem der Ansprüche 29 bis 32, **dadurch gekennzeichnet, dass** der Verstellantrieb (4) neben dem - in verstellrichtung (z) der zu verstellenden Fensterscheibe (3) betrachtet - oberen Ende des Führungsbereiches (2) angeordnet ist, der näher beim Massenschwerpunkt der zu verstellenden Fensterscheibe (3) liegt.

34. Verstellsystem nach einem der vorhergehenden Ansprüche, **dadurch gekennzeichnet, dass** zwei quer zur Verstellrichtung (z) zu verstellenden Fensterscheibe (3) voneinander beabstandete, jeweils in Verstellrichtung (z) der zu verstellenden Fensterscheibe erstreckte Führungsbereiche (1, 2) vorgesehen sind, die jeweils mindestens einen Umgriff (15) für eine seitliche Scheibenkante (3a, 3b) der zu verstellenden Fensterscheibe aufweisen.

35. Verstellsystem nach einem der vorhergehenden Ansprüche, **dadurch gekennzeichnet, dass** ein Motor (42) und/oder eine Steuereinheit (43) des Verstellantriebs (3) auf einer dem Fahrzeuginnenraum eines Kraftfahrzeugs zugeordneten Seite einer Montageplatte angeordnet sind, mit der eine in der Türinnenhaut (6) der Kraftfahrzeugtür vorgesehene Montageöffnung verschließbar ist.

36. Verstellsystem nach einem der vorhergehenden Ansprüche, **dadurch gekennzeichnet, dass** der Fensterheber zwei als Zahnstangen ausgebildete Führungsbereiche (1, 2) umfasst, die auf einem gemeinsamen Aggregateträger (7) angeordnet sind.

37. Verstellsystem nach Anspruch 36, **dadurch gekennzeichnet, dass** mit einer in Verstellrichtung (z) der zu verstellenden Fensterscheibe (3) erstreckten Längsverzahnung (19, 29) jeder der beiden Zahnstangen ein Zahnrad (5a, 5b) in Eingriff steht, das bei einer Drehbewegung entlang der jeweils zugeordneten Längsverzahnung (19, 29) bewegt wird, dass die beiden Zahnräder (5a, 5b) von einem gemeinsamen Motor (42) angetrieben werden und dass der Motor (42) mit der zu verstellenden Fensterscheibe (3) verbunden ist.

38. Verstellsystem nach Anspruch 36, **dadurch gekennzeichnet, dass** mit einer in Verstellrichtung (z) der zu verstellenden Fensterscheibe (3) erstreckten Längsverzahnung (19, 29) jeder der beiden Zahnstangen ein Zahnrad (5a, 5b) in Eingriff steht, das bei einer Drehbewegung entlang der jeweils zugeordneten Längsverzahnung (19, 29) bewegt wird, und dass jedes der beiden Zahnräder (5a, 5b) über einen eigenen Motor angetrieben wird, wobei die zu verstellende Fensterscheibe (3) bei einer Längsbewegung der Zahnräder (5a, 5b) in Verstellrichtung (z) mitgenommen wird.

39. Verstellsystem nach einem der Ansprüche 36 bis 38, **dadurch gekennzeichnet, dass** die beiden Zahnräder (5a, 5b) an jeweils einem mit der zu verstellenden Fensterscheibe (3) verbundenen Mitnehmer (13', 14) gelagert sind.

40. Verstellsystem nach einem der vorhergehenden Ansprüche, **dadurch gekennzeichnet, dass** der Fensterheber zwei in Verstellrichtung (z) erstreckte, quer zur Verstellrichtung voneinander beabstandete Führungsbereiche (1, 2) aufweist, entlang derer sich jeweils eine Spindel (1A, 2B) erstreckt, auf der jeweils eine Spindelmutter (24a, 24b) drehbar und in Verstellrichtung (z) beweglich geführt ist.

41. Verstellsystem nach Anspruch 40, **dadurch gekennzeichnet, dass** jeder Spindelmutter (24a, 24b) ein Motor (42a, 42b) zugeordnet ist, der die jeweils zugeordnete Spindelmutter (24a, 24b) antreibt.

42. Verstellsystem nach Anspruch 40 oder 41, **dadurch gekennzeichnet, dass** die jeweilige Spindelmutter (24a, 24b) über einen Mitnehmer (13", 14") mit der zu verstellenden Fensterscheibe (3) verbunden ist.

43. Verstellsystem nach einem der vorhergehenden Ansprüche, **dadurch gekennzeichnet, dass** ein gemeinsamer, umschaltbarer Verstellantrieb sowohl für den Fensterheber als auch für das Türschloss (100) vorgesehen ist.

44. Verstellsystem nach einem der vorhergehenden Ansprüche, **dadurch gekennzeichnet, dass** dessen Komponenten (1, 2, 3, 4, 10, 100, 110, 120) vor dem Einbau des Verstellsystems in eine Kraftfahrzeugtür komplett vormontierbar sind.

45. Verstellsystem nach Anspruch 44, **dadurch gekennzeichnet, dass** die elektrischen und mechanischen Funktionen der Komponenten (1, 2, 3, 4, 10, 100, 110, 120) des Verstellsystems vor dessen Einbau in eine Kraftfahrzeugtür überprüfbar sind.

46. Verstellsystem nach einem der vorhergehenden Ansprüche, **dadurch gekennzeichnet, dass** das Verstellsystem auf einem Aggregateträger (7) außerhalb einer Kraftfahrzeugtür vormontierbar ist.

47. Verstellsystem nach Anspruch 46, **dadurch gekennzeichnet, dass** der Aggregateträger (7) aus Metall besteht.

48. Verstellsystem nach Anspruch 46, **dadurch gekennzeichnet, dass** der Aggregateträger (7) aus Kunststoff besteht.

49. Verstellsystem nach einem der Ansprüche 46 bis 48, **dadurch gekennzeichnet, dass** ein Teil der Komponenten (2, 16) des Verstellsystems einstückig an dem Aggregateträger (7) angeformt sind.

50. Verstellsystem nach Anspruch 49, **dadurch gekennzeichnet, dass** mindestens ein Führungsbereich (2, 16) des Fensterhebers einstückig am Aggregateträger (7) angeformt ist.

51. Verstellsystem nach einem der vorhergehenden Ansprüche, **dadurch gekennzeichnet, dass** der Fensterheber zwei in Verstellrichtung (z) erstreckte, quer zur Verstellrichtung (z) voneinander beabstandete Führungsbereiche (1, 2) aufweist, die über einen Verbindungsbereich (8, 8') miteinander verbunden sind, wobei der Verbindungsbereich (8, 8') bevorzugt den Verstellantrieb (4) des Fensterhebers trägt.

52. Verstellsystem nach Anspruch 51, **dadurch gekennzeichnet, dass** der Verbindungsbereich (8) über eine Steckverbindung einerseits mit der durch einen Führungsbereich (1) und den Schlossträger (10) gebildeten Baueinheit und andererseits mit einem zweiten Führungsbereich (2) verbindbar ist.

53. Verstellsystem nach Anspruch 51, **dadurch gekennzeichnet, dass** die durch einen Führungsbereich (1) und den Schlossträger (10) gebildete Baueinheit durch einen einstückig angeformten Verbindungsbereich (8') mit einem weiteren Führungsbereich (2) verbunden ist.

54. Verstellsystem nach einem der vorhergehenden Ansprüche, **dadurch gekennzeichnet, dass** die durch einen Führungsbereich (1) und den Schlossträger (10) gebildete Baueinheit einen Aufnahmebereich (10a) zur Aufnahme des Verstellantriebs (4) aufweist.

55. Verstellsystem nach einem der vorhergehenden Ansprüche, **dadurch gekennzeichnet, dass** der Fensterheber des Verstellsystems zwei entlang der Verstellrichtung (z) der zu verstellenden Fensterscheibe (3) erstreckte Führungsbereiche (1, 2) aufweist, die quer zur Verstellrichtung (z) voneinander beabstandet sind und dass ein Führungsbereich (1) mit dem Schlossträger (10) eine Baueinheit bildet und der andere Führungsbereich (2) mit dem Verstellantrieb (4) zu einem vormontierten Modul zusammengefasst ist.

## Claims

1. Adjusting system for a motor vehicle door with
- a window winder for adjusting a window, which comprises at least one force transmitting element (1A, 2B; 19, 29; 130, 140) which is longitudinally extended in the direction of adjustment (z) of the window (3) and via which the window to be adjusted is coupled to an adjusting drive of the window winder, with the force transmitting element (1A, 2B; 19, 29; 130, 140) serving to move a carrier (13, 13', 14, 14') along the direction of adjustment (z) of the window (3) to be adjusted, which carrier (13, 13', 14, 14') is connected to the window (3) to be adjusted,
- at least one guide area (1) of the window winder for guiding the window (3) along a direction of adjustment (z),
- a door lock (100) and
- a lock support (10) on which the door lock (100) may be pre-assembled outside a motor vehicle door,
the guide area (1) of the window winder and the lock support (10) being fixedly connected to one another, such that the guide area (1) and the lock support (10) form a structural unit,
**characterized in that**
the guide area (1) combined with the lock support (10) into a structural unit comprises at least one overlap area (15) for a lateral window edge (3a) of the window (3) to be adjusted, which overlap area (15) is spaced apart from the or each force transmission element (1A, 2B; 19, 29; 130, 140) transversely with respect to the direction of adjustment (z).

2. Adjusting system according to claim 1,
**characterized in that** the guide area (1) and the lock support (10) are connected directly to one another.

3. Adjusting system according to claim 1 or 2,
**characterized in that** the guide area (1) and the lock support (10) are unreleasably connected to one another.

4. Adjusting system according to one of the preceding claims, **characterized in that** the guide area (1) and the lock support (10) are integrally formed with one another.

5. Adjusting system according to claim 4,
**characterized in that** the guide area (1) and the lock support (10) form an integrally formed plastic injection-molded part.

6. Adjusting system according to claim 4,
**characterized in that** the guide area (1) and the lock support (10) form an integrally formed light metal casting.

7. Adjusting system according to one of the preceding claims, **characterized in that** the structural unit comprising the guide area (1) and the lock support (10) comprises at least one part of a housing for the door lock (100).

8. Adjusting system according to one of the preceding claims, **characterized in that** the structural unit comprising the guide area (1) and the lock support (10) comprises at least one part of a housing (40) for the adjusting drive (4) of the window winder.

9. Adjusting system according to one of the preceding claims, **characterized in that** the structural unit comprising the guide area (1) and the lock support (10) comprises at least one part of a housing for a control unit (43).

10. Adjusting system according to one of the preceding claims, **characterized in that** the structural unit comprising the guide area (1) and the lock support (10) carries at least one of the following functional elements:
- an external handle holder (110),
- a door internal opener (120),
- a cover for the door lock (100),
- guide means (15) for a lateral window edge (3a) of the window (3) to be adjusted,
- the adjusting drive (4) for the window winder,
- a control unit (43) for the window winder and/or the lock (100),
- electrical conductors for the power supply and/or for signal transmission,
- a sensor system for the window winder and/or the lock (100),
- means for protection against moisture and/or
- fastening elements, in particular in the form of clip elements, for fixing a functional component to the structural unit.

11. Adjusting system according to one of the preceding claims, **characterized in that** the guide area (1) of the window winder and the lock support (10) are connected to one another via a deformable region, so that the position of the lock support (10) may be varied relative to the guide area (1) by deforming the deformable region for tolerance compensation.

12. Adjusting system according to claim 11,
**characterized in that** the guide area (1) and the lock support (10) are connected to one another via a flexible region.

13. Adjusting system according to claim 11 or 12, **characterized in that** the guide area (1) and the lock support (10) are connected to one another via an integrally formed deformable region.

14. Adjusting system according to one of the preceding claims, **characterized in that** the structural unit comprising the guide area (1) and the lock support (10) comprises fixing elements which are provided for the temporary fixing of at least one of the following named components for the purpose of secure transportation:
- a door internal opener (120),
- the adjusting drive (4) for the window winder,
- a control unit (43) for the window winder and/or the lock (100),
- electrical conductors for the power supply and/or for signal transmission,
- a second guide area 2 for the window winder.

15. Adjusting system according to one of the preceding claims, **characterized in that** the window winder is configured as a single-strand window winder with just one force transmitting element (130, 140) longitudinally extended in the direction of adjustment (z) of the window (3) to be adjusted, and which serves for the transmission of an adjusting torque produced by the adjusting drive (4) onto the window (3) to be adjusted.

16. Adjusting system according to one of claims 1 to 14, **characterized in that** the window winder is configured as a double-strand window winder which comprises two force transmitting elements (1A, 2B; 19, 29; 130, 140) longitudinally extended parallel to one another and which serve for the transmission of a drive torque produced by the adjusting drive (4) onto the window (3) to be adjusted.

17. Adjusting system according to one of the preceding claims, **characterized in that** the at least one force transmitting element (130, 140) is configured as a flexible force transmitting element in particular in the form of a cable or a flexible element of screw-shaped configuration.

18. Adjusting system according to one of claims 1 to 16, **characterized in that** the at least one force transmitting element (1A, 2B; 19, 29) is configured as a rigid force transmitting element, in particular in the form of a toothed rack or a spindle.

19. Adjusting system according to one of the preceding claims, **characterized in that** a carrier (13, 14; 13', 14') which may be moved in the direction of adjustment (z) by a force transmitting element (1A, 2B; 19, 29; 130, 140) is arranged along at least one guide area (1, 2) of the window winder.

20. Adjusting system according to claim 19, **characterized in that** the carrier (13', 14) displaceably engages in the associated guide area (1, 2) in the direction of adjustment (z).

21. Adjusting system according to claim 19, **characterized in that** the carrier (13, 14') is loosely guided along the associated guide area (1, 2).

22. Adjusting system according to one of the preceding claims, **characterized in that** the at least one guide area (1, 2) of the window winder carries means (1a, 1b, 2a, 2b) for deflecting a flexible traction means (Z).

23. Adjusting system according to claim 22, **characterized in that** the deflection means are configured as deflection pulleys (1a, 1b, 2a, 2b).

24. Adjusting system according to claim 22, **characterized in that** the deflection means are configured as sliding elements which are preferably integrally formed on the associated guide area (1, 2).

25. Adjusting system according to one of claims 22 to 24, **characterized in that** the deflection means (1a, 1b, 2a, 2b) are pre-assembled on the associated guide area (1, 2) and when fastening the adjusting system to a door body are connected directly to the door body.

26. Adjusting system according to one of the preceding claims, **characterized in that** the guide area (1) comprises a plurality of overlap areas (15) arranged one after the other in the direction of extension (z) of the guide area (1).

27. Adjusting system according to one of the preceding claims, **characterized in that** a carrier (13) is loosely guided along the guide area (1) combined with the lock support (10) into a structural unit.

28. Adjusting system according to one of the preceding claims, **characterized in that** a carrier (14) is positively engaged with a further guide area (2) of the window winder extended in the direction of adjustment (z) of the window (3), and is forcibly guided along the direction of adjustment (z) of the window (3) to be adjusted.

29. Adjusting system according to one of the preceding claims, **characterized in that** additionally to the guide area (1) combined with the lock support (10) into a structural unit, a further guide area (2) is provided extended in the direction of adjustment (z) of the window (3) to be adjusted, which is arranged closer to the center of gravity of the window (3) than the other guide area (1).

30. Adjusting system according to claim 29, **characterized in that** the guide area (2) arranged closer to the center of gravity of the window (3) to be adjusted consists of a material with a greater load bearing capacity than the other guide area (1).

31. Adjusting system according to claim 30, **characterized in that** the one guide area (2) consists of metal and the other guide area (1) consists of plastics.

32. Adjusting system according to one of claims 29 to 31, **characterized in that** the one guide area (2) is arranged such that it carries between 60% and 80% of the window weight (G) and **in that** the other guide area (1) is arranged such that it carries between 20% and 40% of the window weight (G).

33. Adjusting system according to one of claims 29 to 32, **characterized in that** the adjusting drive (4) - viewed in the direction of adjustment (z) of the window to be adjusted (3) - is arranged adjacent to the upper end of the guide area (2) which is located closer to the center of gravity of the window (3) to be adjusted.

34. Adjusting system according to one of the preceding claims, **characterized in that** two guide areas (1, 2) are provided spaced apart from one another transversely to the direction of adjustment (z) of the window (3) to be adjusted, respectively extended in the direction of adjustment (z) of the window to be adjusted, which respectively comprise at least one overlap (15) for a lateral window edge (3a, 3b) of the window to be adjusted.

35. Adjusting system according to one of the preceding claims, **characterized in that** a motor (42) and/or a control unit (43) of the adjusting drive (3) are arranged on a side of a mounting plate associated with the vehicle interior of a motor vehicle, by which a mounting hole provided in the door inner skin (6) of the motor vehicle door may be closed.

36. Adjusting system according to one of the preceding claims, **characterized in that** the window winder comprises two guide areas (1, 2) configured as toothed racks, which are arranged on a common assembly support (7).

37. Adjusting system according to claim 36, **characterized in that**, with a longitudinal toothed portion (19, 29) of each of the two toothed racks, extended in the direction of adjustment (z) of the window (3) to be adjusted, a gearwheel (5a, 5b) is in engagement, which during a rotational movement is moved along the respectively associated longitudinal toothed portion (19, 29), such that the two gearwheels (5a, 5b) of a common motor (42) are driven, and **in that** the motor (42) is connected to the window (3) to be adjusted.

38. Adjusting system according to claim 36, **characterized in that**, with a longitudinal toothed portion (19, 29) of each of the two toothed racks, extended in the direction of adjustment (z) of the window (3) to be adjusted, a gearwheel (5a, 5b) is in engagement, which during a rotational movement is moved along the respectively associated longitudinal toothed portion (19, 29), and **in that** each of the two gearwheels (5a, 5b) is driven by a separate motor, the window (3) to be adjusted being driven in the direction of adjustment (z) during a longitudinal movement of the gearwheels (5a, 5b).

39. Adjusting system according to one of claims 36 to 38, **characterized in that** the two gearwheels (5a, 5b) are mounted on one respective carrier (13', 14) connected to the window (3) to be adjusted.

40. Adjusting system according to one of the preceding claims, **characterized in that** the window winder comprises two guide areas (1, 2) extended in the direction of adjustment (z) and spaced apart from one another transversely to the direction of adjustment, along which one respective spindle (1A, 2B) extends, on which one respective spindle nut (24a, 24b) is rotatably guided and movably guided in the direction of adjustment (z).

41. Adjusting system according to claim 40, **characterized in that** a motor (42a, 42b) is associated with each spindle nut (24a, 24b) which drives the respective associated spindle nut (24a, 24b).

42. Adjusting system according to claim 40 or 41, **characterized in that** the respective spindle nut (24a, 24b) is connected by a carrier (13", 14") to the window (3) to be adjusted.

43. Adjusting system according to one of the preceding claims, **characterized in that** a common, switchable adjusting drive is provided both for the window winder and for the door lock (100).

44. Adjusting system according to one of the preceding claims, **characterized in that** the components thereof (1, 2, 3, 4, 10, 100, 110, 120) are able to be completely pre-assembled before the installation of the adjusting system in a motor vehicle door.

45. Adjusting system according to claim 44,
**characterized in that** the electrical and mechanical functions of the components (1, 2, 3, 4, 10, 100, 110, 120) of the adjusting system may be tested before the installation thereof in a motor vehicle door.

46. Adjusting system according to one of the preceding claims, **characterized in that** the adjusting system may be pre-assembled on an assembly support (7) outside a motor vehicle door.

47. Adjusting system according to claim 46,
**characterized in that** the assembly support (7) consists of metal.

48. Adjusting system according to claim 46,
**characterized in that** the assembly support (7) consists of plastics.

49. Adjusting system according to one of claims 46 to 48, **characterized in that** a portion of the components (2, 16) of the adjusting system is integrally formed on the assembly support (7).

50. Adjusting system according to claim 49,
**characterized in that** at least one guide area (2, 16) of the window winder is integrally formed on the assembly support (7).

51. Adjusting system according to one of the preceding claims, **characterized in that** the window winder comprises two guide areas (1, 2) extended in the direction of adjustment (z) and spaced apart from one another transversely to the direction of adjustment (z), which are connected to one another via a connecting area (8, 8'), the connecting area (8, 8') preferably carrying the adjusting drive (4) of the window winder.

52. Adjusting system according to claim 51, **characterized in that** the connecting area (8) may be connected via a plug connection, on the one hand, to the structural unit formed by a guide area (1) and the lock support (10) and, on the other hand, to a second guide area (2).

53. Adjusting system according to claim 51,
**characterized in that** the structural unit formed by a guide area (1) and the lock support (10) is connected by an integrally formed connecting area (8') to a further guide area (2).

54. Adjusting system according to one of the preceding claims, **characterized in that** the structural unit formed by a guide area (1) and the lock support (10) comprises a receiving region (10a) for receiving the adjusting drive (4).

55. Adjusting system according to one of the preceding claims, **characterized in that** the window winder of the adjusting system comprises two guide areas (1, 2) extended along the direction of adjustment (z) of the window (3) to be adjusted, which are spaced apart from one another transversely to the direction of adjustment (z) and **in that** a guide area (1) with the lock support (10) forms a structural unit and the other guide area (2) is combined with the adjusting drive (4) into a pre-assembled module.

## Revendications

1. Système de déplacement pour une porte de véhicule automobile comprenant :
- un lève-vitre pour le déplacement d'une vitre qui présente au moins un élément de transmission de force (1A, 2B ; 19, 29 ; 130, 140) s'étendant longitudinalement dans une direction de déplacement (z) de la vitre (3), par le biais duquel la vitre à déplacer est couplée à un entraînement de déplacement du lève-vitre, un entraîneur (13, 13', 14, 14') étant déplacé le long de la direction de déplacement (z) de la vitre (3) à déplacer par l'élément de transmission de force (1A, 2B ; 19, 29 ; 130, 140), lequel est relié à la vitre (3) à déplacer,
- au moins une zone de guidage (1) du lève-vitre pour le guidage de la vitre (3) le long d'une direction de déplacement (z),
- une serrure de porte (100) et
- un support de serrure (10), sur lequel peut être prémontée la serrure de porte (100) en dehors d'une porte de véhicule automobile,
la zone de guidage (1) du lève-vitre et le support de serrure (10) étant reliés fixement l'un à l'autre de telle sorte que la zone de guidage (1) et le support de serrure (10) forment une unité de construction,
**caractérisé en ce**
**que** la zone de guidage (1) rassemblée avec le support de serrure (10) en une unité de construction présente au moins une zone de serrage (15) pour une arête (3a) latérale de la vitre (3) à déplacer, qui est espacée du ou de chaque élément de transmission de force (1A, 2B ; 19, 29 ; 130, 140) transversalement à la direction de déplacement (z).

2. Système de déplacement selon la revendication 1, **caractérisé en ce que** la zone de guidage (1) et le support de serrure (10) sont directement reliés l'un à l'autre.

3. Système de déplacement selon la revendication 1 ou 2, **caractérisé en ce que** la zone de guidage (1) et le support de serrure (10) sont reliés de manière inamovible l'un à l'autre.

4. Système de déplacement selon l'une quelconque des revendications précédentes,
**caractérisé en ce que** la zone de guidage (1) et le support de serrure (10) sont formés d'un seul tenant l'un sur l'autre.

5. Système de déplacement selon la revendication 4, **caractérisé en ce que** la zone de guidage (1) et le support de serrure (10) forment une pièce moulée par injection en matière plastique formée d'un seul tenant.

6. Système de déplacement selon la revendication 4, **caractérisé en ce que** la zone de guidage (1) et le support de serrure (10) forment une pièce moulée en métal léger formée d'un seul tenant.

7. Système de déplacement selon l'une quelconque des revendications précédentes,
**caractérisé en ce que** l'unité de construction comprenant la zone de guidage (1) et le support de serrure (10) présente au moins une partie d'un boîtier pour la serrure de porte (100).

8. Système de déplacement selon l'une quelconque des revendications précédentes,
**caractérisé en ce que** l'unité de construction comprenant la zone de guidage (1) et le support de serrure (10) présente au moins une partie d'un boîtier (40) pour l'entraînement de déplacement (4) du lève-vitre.

9. Système de déplacement selon l'une quelconque des revendications précédentes,
**caractérisé en ce que** l'unité de construction comprenant la zone de guidage (1) et le support de serrure (10) présente au moins une partie d'un boîtier pour une unité de commande (43).

10. Système de déplacement selon l'une quelconque des revendications précédentes,
**caractérisé en ce que** l'unité de construction comprenant la zone de guidage (1) et le support de serrure (10) porte au moins l'un des éléments fonctionnels suivants:
- un support de manette extérieur (110),
- un dispositif d'ouverture intérieur de porte (120),
- un élément de recouvrement pour la serrure de porte (100),
- des moyens de guidage (15) pour une arête (3a) latérale de la vitre (3) à déplacer,
- l'entraînement de déplacement (4) pour le lève-vitre,
- une unité de commande (43) pour le lève-vitre et/ou la serrure (100),
- des pistes conductrices électriques pour l'alimentation électrique et/ou la transmission de signaux,
- un système de détection pour le lève-vitre et/ou la serrure (100),
- des moyens pour protéger de l'humidité et/ou
- des éléments de fixation, en particulier sous la forme d'éléments clips, pour la fixation d'un composant fonctionnel sur l'unité de construction.

11. Système de déplacement selon l'une quelconque des revendications précédentes,
**caractérisé en ce que** la zone de guidage (1) du lève-vitre et le support de serrure (10) sont reliés l'un à l'autre par une zone déformable de sorte que la position du support de serrure (10) par rapport à la zone de guidage (1) peut être variée par la déformation de la zone déformable à des fins de compensation de tolérances.

12. Système de déplacement selon la revendication 11, **caractérisé en ce que** la zone de guidage (1) et le support de serrure (10) sont reliés l'un à l'autre par une zone élastique en flexion.

13. Système de déplacement selon la revendication 11 ou 12, **caractérisé en ce que** la zone de guidage (1) et le support de serrure (10) sont reliés l'un à l'autre par une zone déformable, formée d'un seul tenant.

14. Système de déplacement selon l'une quelconque des revendications précédentes,
**caractérisé en ce que** l'unité de construction comprenant la zone de guidage (1) et le support de serrure (10) présente des éléments de fixation qui sont prévus pour la fixation temporaire d'au moins l'un des composants cités ci-après à des fins de blocage pour le transport :
- un dispositif d'ouverture intérieur de porte (120),
- l'entraînement de déplacement (4) pour le lève-vitre,
- une unité de commande (43) pour le lève-vitre et/ou la serrure (100),
- des pistes conductrices électriques pour l'alimentation électrique et/ou la transmission de signaux,
- une deuxième zone de guidage 2 pour le lève-vitre.

15. Système de déplacement selon l'une quelconque des revendications précédentes,
**caractérisé en ce que** le lève-vitre est réalisé comme un lève-vitre monophasé avec précisément un élément de transmission de force (130, 140) s'étendant longitudinalement dans la direction de déplacement (z) de la vitre (3) à déplacer, lequel sert à transmettre un couple de déplacement généré par l'entraînement de déplacement (4) à la vitre (3) à déplacer.

16. Système de déplacement selon l'une quelconque des revendications 1 à 14,
**caractérisé en ce que** le lève-vitre est réalisé comme un lève-vitre biphasé qui présente deux éléments de transmission de force (1A, 2B ; 19, 29 ; 130, 140) s'étendant longitudinalement parallèlement l'un par rapport à l'autre, qui servent à transmettre un couple d'entraînement généré par l'entraînement de déplacement (4) à la vitre (3) à déplacer.

17. Système de déplacement selon l'une quelconque des revendications précédentes,
**caractérisé en ce que** l'au moins un élément de transmission de force (130, 140) est réalisé comme un élément de transmission de force flexible, en particulier sous la forme d'un câble ou d'un élément élastique en flexion réalisé en forme d'hélice.

18. Système de déplacement selon l'une quelconque des revendications 1 à 16,
**caractérisé en ce que** l'au moins un élément de transmission de force (1A, 2B ; 19, 29) est réalisé comme un élément de transmission de force rigide, en particulier sous la forme d'une crémaillère ou d'une broche.

19. Système de déplacement selon l'une quelconque des revendications précédentes,
**caractérisé en ce que** le long d'au moins une zone de guidage (1, 2) du lève-vitre est disposé un entraîneur (13, 14 ; 13', 14') mobile grâce à un élément de transmission de force (1A, 2B ; 19, 29 ; 130, 140) dans la direction de déplacement (z).

20. Système de déplacement selon la revendication 19, **caractérisé en ce que** l'entraîneur (13', 14) s'engage à coulissement dans la direction de déplacement (z) dans la zone de guidage (1, 2) associée.

21. Système de déplacement selon la revendication 19, **caractérisé en ce que** l'entraîneur (13, 14') est librement guidé le long de la zone de guidage associée (1, 2).

22. Système de déplacement selon l'une quelconque des revendications précédentes,
**caractérisé en ce que** l'au moins une zone de guidage (1, 2) du lève-vitre porte des moyens (1a, 1b, 2a, 2b) pour le renvoi d'un moyen de traction (Z) flexible.

23. Système de déplacement selon la revendication 22, **caractérisé en ce que** les moyens de renvoi sont réalisés comme des poulies de renvoi (1a, 1b, 2a, 2b).

24. Système de déplacement selon la revendication 22, **caractérisé en ce que** les moyens de renvoi sont réalisés comme des éléments glissants qui sont formés de préférence d'un seul tenant sur la zone de guidage (1, 2) associée.

25. Système de déplacement selon l'une quelconque des revendications 22 à 24,
**caractérisé en ce que** les moyens de renvoi (1a, 1b, 2a, 2b) sont prémontés sur la zone de guidage (1, 2) associée et sont reliés directement à la carrosserie de porte lors de la fixation du système de déplacement sur une carrosserie de porte.

26. Système de déplacement selon l'une quelconque des revendications précédentes,
**caractérisé en ce que** la zone de guidage (1) présente une pluralité de zones de serrage (15) disposées les unes derrière les autres dans une direction de développement (z) de la zone de guidage (1).

27. Système de déplacement selon l'une quelconque des revendications précédentes,
**caractérisé en ce qu'**un entraîneur (13) est librement guidé le long de la zone de guidage (1) rassemblée avec le support de serrure (10) en une unité de construction.

28. Système de déplacement selon l'une quelconque des revendications précédentes,
**caractérisé en ce qu'**un entraîneur (14) qui est guidé à force le long de la direction de déplacement (z) de la vitre (3) à déplacer, est en engagement par complémentarité de forme avec une autre zone de guidage (2) du lève-vitre s'étendant dans la direction de déplacement (z) de la vitre (3).

29. Système de déplacement selon l'une quelconque des revendications précédentes,
**caractérisé en ce qu'**outre la zone de guidage (1) rassemblée avec le support de serrure (10) en une unité de construction, une autre zone de guidage (2) s'étendant dans la direction de déplacement (z) de la vitre (3) à déplacer est prévue, laquelle est disposée plus près du centre de gravité de la vitre (3) que l'autre zone de guidage (1).

30. Système de déplacement selon la revendication 29, **caractérisé en ce que** la zone de guidage (2) disposée plus près du centre de gravité de la vitre (3) à déplacer que l'autre zone de guidage (1), se compose d'une matière pouvant être sollicitée.

31. Système de déplacement selon la revendication 30, **caractérisé en ce que** ladite une zone de guidage (2) se compose de métal et l'autre zone de guidage (1) de matière plastique.

32. Système de déplacement selon l'une quelconque des revendications 29 à 31,
**caractérisé en ce que** ladite une zone de guidage (2) est disposée de telle sorte qu'elle porte entre 60 et 80 % du poids (G) de la vitre et **en ce que** l'autre zone de guidage (1) est disposée de telle sorte qu'elle porte entre 20 et 40 % du poids (G) de la vitre.

33. Système de déplacement selon l'une quelconque des revendications 29 à 32,
**caractérisé en ce que** l'entraînement de déplacement (4) est disposé à côté de l'extrémité supérieure de la zone de guidage (2), considérée dans la direction de déplacement (z) de la vitre (3) à déplacer, qui se trouve plus près du centre de gravité de la vitre (3) à déplacer.

34. Système de déplacement selon l'une quelconque des revendications précédentes,
**caractérisé en ce que** deux zones de guidage (1, 2) espacées l'une de l'autre transversalement à la direction de déplacement (z) de la vitre (3) à déplacer, s'étendant respectivement dans la direction de déplacement (z) de la vitre à déplacer sont prévues, lesquelles présentent respectivement au moins un serrage (15) pour une arête (3a, 3b) latérale de la vitre à déplacer.

35. Système de déplacement selon l'une quelconque des revendications précédentes,
**caractérisé en ce qu'**un moteur (42) et/ou une unité de commande (43) de l'entraînement de déplacement (3) est disposée sur un côté associé à l'habitacle d'un véhicule automobile d'une plaque de montage, avec laquelle une ouverture de montage prévue dans le panneau intérieur (6) de la porte du véhicule automobile peut être fermée.

36. Système de déplacement selon l'une quelconque des revendications précédentes,
**caractérisé en ce que** le lève-vitre comporte deux zones de guidage (1, 2) réalisées comme des crémaillères, qui sont disposées sur un support d'ensemble (7) commun.

37. Système de déplacement selon la revendication 36, **caractérisé en ce qu'**une roue dentée (5a, 5b) est en engagement avec une denture longitudinale (19, 29) s'étendant dans la direction de déplacement (z) de la vitre (3) à déplacer de chacune des deux crémaillères, laquelle roue est déplacée lors d'un mouvement de rotation le long de la denture longitudinale (19, 29) associée respectivement, **en ce que** les deux roues dentées (5a, 5b) sont entraînées par un moteur (42) commun et **en ce que** le moteur (42) est relié à la vitre (3) à déplacer.

38. Système de déplacement selon la revendication 36, **caractérisé en ce qu'**une roue dentée (5a, 5b) est en engagement avec une denture longitudinale (19, 29) s'étendant dans la direction de déplacement (z) de la vitre (3) à déplacer de chacune des deux crémaillères, laquelle roue est déplacée lors d'un mouvement de rotation le long de la denture longitudinale (19, 29) associée respectivement et **en ce que** chacune des deux roues dentées (5a, 5b) est entraînée par un propre moteur, la vitre (3) à déplacer étant entraînée lors d'un mouvement longitudinal des roues dentées (5a, 5b) dans la direction de déplacement (z).

39. Système de déplacement selon l'une quelconque des revendications 36 à 38,
**caractérisé en ce que** les deux roues dentées (5a, 5b) sont logées sur respectivement un entraîneur (13', 14) relié à la vitre (3) à déplacer.

40. Système de déplacement selon l'une quelconque des revendications précédentes,
**caractérisé en ce que** le lève-vitre présente deux zones de guidage (1, 2) espacées l'une de l'autre transversalement à la direction de déplacement, s'étendant dans la direction de déplacement (z), le long desquelles une broche (1A, 2B) s'étend respectivement, sur laquelle un écrou de broche (24a, 24b) est guidé respectivement à rotation et mobile dans la direction de déplacement (z).

41. Système de déplacement selon la revendication 40, **caractérisé en ce qu'**un moteur (42a, 42b), qui entraîne l'écrou de broche (24a, 24b) associé respectivement, est associé à chaque écrou de broche (24a, 24b).

42. Système de déplacement selon la revendication 40 ou 41, **caractérisé en ce que** l'écrou de broche (24a, 24b) respectif est relié par un entraîneur (13", 14") à la vitre (3) à déplacer.

43. Système de déplacement selon l'une quelconque des revendications précédentes,
**caractérisé en ce qu'**un entraînement de déplacement commutable, commun est prévu aussi bien pour le lève-vitre que pour la serrure de porte (100).

44. Système de déplacement selon l'une quelconque des revendications précédentes,
**caractérisé en ce que** ses composants (1, 2, 3, 4, 10, 100, 110, 120) sont complètement prémontés avant l'installation du système de déplacement dans une porte de véhicule automobile.

45. Système de déplacement selon la revendication 44, **caractérisé en ce que** les fonctions électriques et mécaniques des composants (1, 2, 3, 4, 10, 100, 110, 120) du système de déplacement peuvent être contrôlées avant leur installation dans une porte de véhicule automobile.

46. Système de déplacement selon l'une quelconque des revendications précédentes,
**caractérisé en ce que** le système de déplacement peut être prémonté sur un support d'ensemble (7) en dehors d'une porte de véhicule automobile.

47. Système de déplacement selon la revendication 46, **caractérisé en ce que** le support d'ensemble (7) se compose de métal.

48. Système de déplacement selon la revendication 46, **caractérisé en ce que** le support d'ensemble (7) se compose de matière plastique.

49. Système de déplacement selon l'une quelconque des revendications 46 à 48,
**caractérisé en ce qu'**une partie des composants (2, 16) du système de déplacement est formée d'un seul tenant sur le support d'ensemble (7).

50. Système de déplacement selon la revendication 49, **caractérisé en ce qu'**au moins une zone de guidage (2, 16) du lève-vitre est formée d'un seul tenant sur le support d'ensemble (7).

51. Système de déplacement selon l'une quelconque des revendications précédentes,
**caractérisé en ce que** le lève-vitre présente deux zones de guidage (1, 2) espacées l'une de l'autre transversalement à la direction de déplacement (z), s'étendant dans la direction de déplacement (z), qui sont reliées l'une à l'autre par une zone de liaison (8, 8'), la zone de liaison (8, 8') portant de préférence l'entraînement de déplacement (4) du lève-vitre.

52. Système de déplacement selon la revendication 51, **caractérisé en ce que** la zone de liaison (8) peut être reliée par un assemblage par emboîtement d'une part à l'unité de construction formée par une zone de guidage (1) et le support de serrure (10) et d'autre part à une deuxième zone de guidage (2).

53. Système de déplacement selon la revendication 51, **caractérisé en ce que** l'unité de construction formée par une zone de guidage (1) et le support de serrure (10) est reliée par une zone de liaison (8') formée d'un seul tenant à une autre zone de guidage (2).

54. Système de déplacement selon l'une quelconque des revendications précédentes,
**caractérisé en ce que** l'unité de construction formée par une zone de guidage (1) et le support de serrure (10) présente une zone de réception (10a) pour la réception de l'entraînement de déplacement (4).

55. Système de déplacement selon l'une quelconque des revendications précédentes,
**caractérisé en ce que** le lève-vitre du système de déplacement présente deux zones de guidage (1, 2) s'étendant le long de la direction de déplacement (z) de la vitre (3) à déplacer, qui sont espacées l'une de l'autre transversalement à la direction de déplacement (z) et **en ce qu'**une zone de guidage (1) avec le support de serrure (10) forme une unité de construction et l'autre zone de guidage (2) est réunie avec l'entraînement de déplacement (4) en un module prémonté.
